(19) **Europäisches Patentamt / European Patent Office / Office européen des brevets**

(11) **EP 4 694 153 A1**

(12) **EUROPEAN PATENT APPLICATION**
published in accordance with Art. 153(4) EPC

(43) Date of publication:
**11.02.2026 Bulletin 2026/07**

(21) Application number: **24784040.8**

(22) Date of filing: **14.03.2024**

(51) International Patent Classification (IPC):
**H04N 21/472** *(2011.01)*

(52) Cooperative Patent Classification (CPC):
**H04N 21/2343; H04N 21/434; H04N 21/44; H04N 21/4402; H04N 21/472**

(86) International application number:
**PCT/CN2024/081742**

(87) International publication number:
**WO 2024/207955 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 CN 202310348154**

(71) Applicant: **Douyin Vision Co., Ltd.**
**Beijing 100041 (CN)**

(72) Inventors:
- **ZHENG, Gaoting**
  **Beijing 100028 (CN)**

- **GUI, Yongqiang**
  **Beijing 100028 (CN)**
- **SHI, Shu**
  **Los Angeles California 90066 (US)**
- **SUN, Jinbo**
  **Beijing 100028 (CN)**
- **XU, Bin**
  **Beijing 100028 (CN)**

(74) Representative: **Grünecker Patent- und Rechtsanwälte**
**PartG mbB**
**Leopoldstraße 4**
**80802 München (DE)**

(54) **VIDEO PROCESSING METHOD AND APPARATUS, AND ELECTRONIC DEVICE AND STORAGE MEDIUM**

(57) Embodiments of this disclosure provides a method, an apparatus, an electronic device, and a storage medium for video processing, and the method includes: obtaining a video stream to be processed, the video stream comprising a plurality of video frames, and a field of view angle of each video frame being greater than a field of view angle of a video playback device; partitioning each of the plurality of video frames into a plurality of frame portions, a field of view angle of the frame portion being greater than the field of view angle of the video playback device; generating, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream; determining a frame portion to be played from the first video stream and the second video stream based on a video playback parameter of the video playback device.

OBTAIN A VIDEO STREAM TO BE PROCESSED, WHEREIN THE VIDEO STREAM COMPRISES A PLURALITY OF VIDEO FRAMES, AND A FIELD OF VIEW ANGLE OF EACH OF THE PLURALITY OF VIDEO FRAMES IS GREATER THAN A FIELD OF VIEW ANGLE OF A VIDEO PLAYBACK DEVICE — S102

PARTITION EACH OF THE PLURALITY OF VIDEO FRAMES INTO A PLURALITY OF FRAME PORTIONS, A FIELD OF VIEW ANGLE OF THE FRAME PORTION BEING GREATER THAN THE FIELD OF VIEW ANGLE OF THE VIDEO PLAYBACK DEVICE — S104

GENERATE, FOR FRAME PORTIONS AMONG THE PLURALITY OF FRAME PORTIONS THAT HAVE A SAME PICTURE CENTER POINT POSITION, A FIRST VIDEO STREAM AND A SECOND VIDEO STREAM BASED ON A SEQUENTIAL ORDER OF PLAYBACK TIMESTAMPS OF THE FRAME PORTIONS — S106

DETERMINE A FRAME PORTION TO BE PLAYED FROM THE FIRST VIDEO STREAM AND THE SECOND VIDEO STREAM BASED ON A VIDEO PLAYBACK PARAMETER OF THE VIDEO PLAYBACK DEVICE — S108

FIG. 1

## Description

This application claims the benefit of Chinese Patent Application No. 202310348154.9, entitled "METHOD, APPARATUS, ELECTRONIC DEVICE AND STORAGE MEDIUM FOR VIDEO PROCESSING," filed on April 03, 2023, the entire content of which is incorporated herein by reference.

## FIELD

The present disclosure relates to the field of image processing, and in particular, to a method, an apparatus, an electronic device, and a storage medium for video processing.

## BACKGROUND

With the popularization of VR (Virtual Reality) devices, more and more users choose to play panoramic videos in VR devices, such as watching a concert and the like, so as to bring a more realistic visual experience.

When the panoramic video is played with the VR device, on the one hand, it is necessary to control the head movement delay to be within 25ms. That is, a delay between a user's head movement and an updated picture being displayed in the VR device shall be less than 25ms, otherwise, the user will feel obvious lag or even feel dizzy. On the other hand, it is necessary to reduce the bandwidth occupied by the server for sending the panoramic video to the VR device, so that more users with a low bandwidth can realize the on-demand play of the panoramic video in the VR device.

## SUMMARY

Embodiments of the present disclosure provides a method, an apparatus, an electronic device, and a storage medium for video processing, which can reduce the delay between a user's head movement and an updated picture being displayed in the VR device, reduce the bandwidth occupied by the server for sending the panoramic video to the VR device, and improve the user experience of on-demand playback of a panoramic video in the VR device.

According to a first aspect, an embodiment of the present disclosure provides a video processing method, including:

obtaining a video stream to be processed, wherein the video stream comprises a plurality of video frames, and a field of view angle of each of the plurality of video frames is greater than a field of view angle of a video playback device;

partitioning each of the plurality of video frames into a plurality of frame portions, a field of view angle of the frame portion being greater than the field of view angle of the video playback device;

generating, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

determining a frame portion to be played from the first video stream and the second video stream based on a video playback parameter of the video playback device.

According to a second aspect, an embodiment of the present disclosure provides a video processing apparatus, including:

a video obtaining unit, configured to obtain a video stream to be processed, wherein the video stream comprises a plurality of video frames, and a field of view angle of each of the plurality of video frames is greater than a field of view angle of a video playback device;

a video partition unit, configured to partition each of the plurality of video frames into a plurality of frame portions, a field of view angle of the frame portion being greater than the field of view angle of the video playback device;

a video generation unit, configured to generate, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

a video distribution unit, configured to determine a frame portion to be played from the first video stream and the second video stream based on a video playback parameter of the video playback device.

According to a third aspect, an embodiment of the present disclosure provides an electronic device, including: a processor; and a memory configured to store computer-executable instructions that, when being executed, cause the processor to perform steps of the method according to the first aspect.

According to a fourth aspect, an embodiment of the present disclosure provides a computer-readable storage medium. The computer-readable storage medium is configured to store computer-executable instructions, wherein the computer-executable instructions, when being executed by a processor, implement steps of the method according to the first aspect.

In one or more embodiments of the present disclosure, a to-be-processed video stream is obtained, and the video stream includes a plurality of video frames. A field of view angle of each video frame in the plurality of video frames is greater than a field of view angle of the video playback device. Each video frame in the plurality of video frames is partitioned into a plurality of frame portions, a field of view angle of a frame portion is greater than the field of view angle of the video playback device. For frame portions among the plurality of frame portions that have a same picture center point position, a first video stream and a second video stream are generated based on a sequential order of playback timestamps of the frame portions. A first group of pictures (GOP) of the first video stream is a standard GOP, and a length of a second group of pictures (GOP) of the second video stream is less than a length of the first group of pictures (GOP) of the first video stream. A frame portion to be played is determined from the first video stream and the second video stream based on a video playback parameter of the video playback device.

According to the embodiment(s), on one hand, an appropriate to-be-played frame portion(s) is selected from the first video stream and the second video stream for the video playback device of a user to play, and the field of view angle of the to-be-played frame portion is greater than the field of view angle of the video playback device at the user side. Hence, when the user views the to-be-played frame portion through the VR device, a head movement in a small range can be served without transmitting the frame portions of 360-degrees of the panorama to the user. Thereby, when the panoramic video is played in the VR device on demand, the bandwidth occupied by the server for sending the panoramic video to the VR device is reduced, and thus the experience of the user playing the panoramic video on-demand in the VR device is improved. On the other hand, the action of generating the first video stream and the second video stream may be performed before the video is played. When the video is being played, it is only needed to select the appropriate to-be-played frame portion from the first video stream and the second video stream based on the video playback parameter of the video playback device of the user and then send it to the video playback device. The processing difficulty of the server is reduced massively, and the processing efficiency of the server is improved. Thereby, when the panoramic video is played on-demand in the VR device, the delay between an occurrence of the user's head movement and the updated picture being displayed in the VR device is reduced, and the experience of the user playing the panoramic video on-demand in the VR device is improved.

**BRIEF DESCRIPTION OF DRAWINGS**

In order to more clearly illustrate one or more embodiments of the present disclosure or the technical solutions in the prior art, the accompanying drawings, which need to be used in the description of the embodiments or the prior art, are briefly introduced below. Obviously, the drawings in the following description are merely some embodiments described in the present disclosure, and for those of ordinary skill in the art, other drawings may be obtained according to these drawings without creative efforts;

FIG. 1 is a schematic flowchart of a video processing method according to an embodiment of the present disclosure;
FIG. 2 is a schematic structural diagram of a video processing system according to an embodiment of the present disclosure;
FIG. 3 is a schematic diagram of a frame portion obtained by partitioning according to an embodiment of the present disclosure;
FIG. 4 is a schematic diagram of a viewing angle spacing according to an embodiment of the present disclosure;
FIG. 5 is a schematic diagram of partitioning video frames in a video stream to obtain frame portions according to an embodiment of the present disclosure;
FIG. 6 is a schematic diagram of an IPP stream and an IP stream according to an embodiment of the present disclosure;
FIG. 7 is a schematic flowchart of selecting a to-be-played frame portion according to an embodiment of the present disclosure;
FIG. 8 is a schematic diagram of a user switching a frame portion according to an embodiment of the present disclosure;
FIG. 9 is a schematic diagram of a scenario of selecting a to-be-played frame portion according to an embodiment of the present disclosure;
FIG. 10 is a schematic structural diagram of a video processing apparatus according to an embodiment of the present disclosure; and

FIG. 11 is a schematic structural diagram of an electronic device according to an embodiment of the present disclosure.

**DETAILED DESCRIPTION**

In order to make those skilled in the art better understand the technical solutions in one or more embodiments of the present disclosure, the technical solutions in one or more embodiments of the present disclosure will be clearly and completely described below with reference to the accompanying drawings in one or more embodiments of the present disclosure. Obviously, the described embodiments are only a part of the embodiments of the present disclosure, and not all embodiments. Based on one or more embodiments of the present disclosure, all other embodiments obtained by those skilled in the art without creative efforts shall fall within the protection scope of the present disclosure.

Embodiments of the present disclosure provides a video processing method, which makes it possible to reduce the delay between an occurrence of the user's head movement and the updated picture being displayed in the VR device, reduce the bandwidth occupied by the server for sending the panoramic video to the VR device, and improve the experience of the user playing the panoramic video on-demand in the VR device, when the panoramic video is played on demand in the VR device. A video processing method provided by an embodiment of the present disclosure can be executed by a background server. The background server may be located in an edge cloud computer room. In aid of implementing the video processing method in the edge cloud computer room, the delay of watching the on-demand video by the user through the VR device can be reduced.

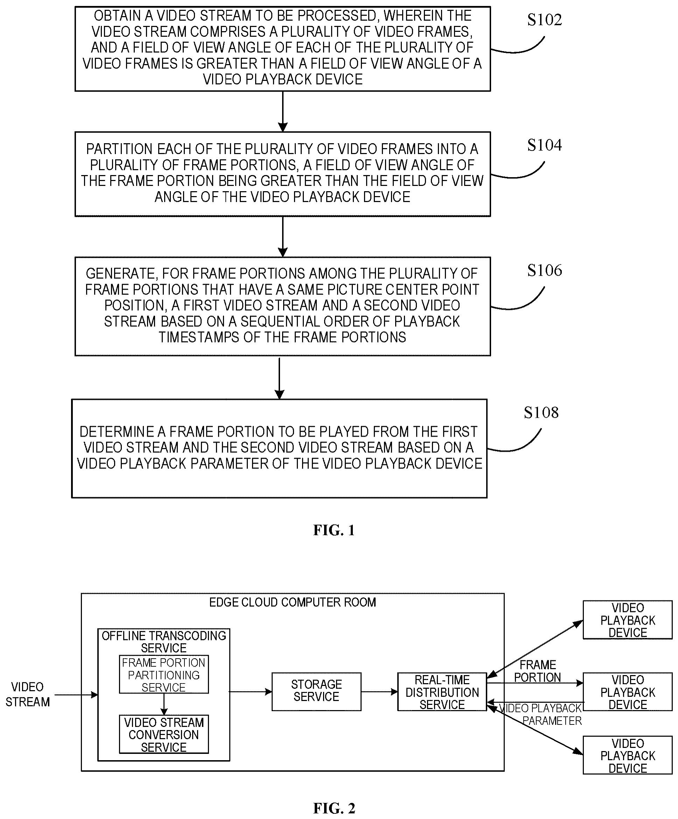

FIG. 1 is a schematic flowchart of a video processing method according to an embodiment of the present disclosure. As shown in Fig. 1, the process comprises:

Step S102: obtain a video stream to be processed, wherein the video stream comprises a plurality of video frames, and a field of view angle of each of the plurality of video frames is greater than a field of view angle of a video playback device;

Step S104: partition each of the plurality of video frames into a plurality of frame portions, a field of view angle of the frame portion being greater than the field of view angle of the video playback device;

Step S106: generate, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

Step S108: determine a frame portion to be played from the first video stream and the second video stream based on a video playback parameter of the video playback device.

According to the embodiment, on one hand, an appropriate to-be-played frame portion(s) is selected from the first video stream and the second video stream for the video playback device of a user to play, and the field of view angle of the to-be-played frame portion is greater than the field of view angle of the video playback device at the user side. Hence, when the user views the to-be-played frame portion through the VR device, a head movement in a small range can be satisfied without transmitting the frame portions of 360-degrees of the panorama to the user. Thereby, when the panoramic video is played in the VR device on demand, the bandwidth occupied by the server for sending the panoramic video to the VR device is reduced, and thus the experience of the user playing the panoramic video on-demand in the VR device is improved. On the other hand, the action of generating the first video stream and the second video stream may be performed before the video is played. When the video is being played, it is only needed to select the appropriate to-be-played frame portion from the first video stream and the second video stream based on the video playback parameter of the video playback device of the user and then send it to the video playback device. The processing difficulty of the server is reduced massively, and the processing efficiency of the server is improved. Thereby, when the panoramic video is played on-demand in the VR device, the delay between an occurrence of the user's head movement and the updated picture being displayed in the VR device is reduced, and the experience of the user playing the panoramic video on-demand in the VR device is improved.

The step S104 in FIG. 1 may be referred to as a frame portion partitioning step for short, and the process of obtaining the first video stream and the second video stream in step S106 may be collectively referred to as a video stream conversion step. The embodiment further includes a process of storing the first video stream and the second video stream, which may be referred to as a video stream storage step for short. In a video-on-demand scenario, the process of selecting, from the stored first video stream and the stored second video stream, a to-be-played frame portion that matches the video playback parameter of the video playback device and sending the to-be-played frame portion to the video playback device for playing by the video playback device may also be referred to as a video distribution step for short.

Based on this, an embodiment of the present disclosure further provides a video processing system, and FIG. 2 is a schematic structural diagram of a video processing system according to an embodiment of the present disclosure. As shown in FIG. 2, the system is deployed in an edge cloud computer room and includes an offline transcoding service, a storage service, and a real-time distribution service. The offline transcoding service includes a frame portion partitioning service and a video stream conversion service. In FIG. 2, the frame portion partitioning service is configured to implement the foregoing frame portion partitioning step, the video stream transcoding service is configured to implement the foregoing video stream conversion step, the storage service is configured to implement the foregoing video stream storage step, and the real-time distribution service is configured to implement the foregoing video distribution step. As can be seen from FIG. 2, after obtaining the on-demand video stream, through the process in FIG. 1, the edge cloud computer room stores the first video stream and the second video stream, and after obtaining the video playback parameter of the video playback device of the user, the edge cloud computer room distributes the frame portion to be played, that matches the video playback parameter, to the video playback device of the user for playing by the video playback device. The video playback device of the user may be a VR device. An on-demand video stream (which may also be referred to as a video source) may be a panoramic 360-degree video stream.

Through the system in FIG. 2, before the user watches the on-demand video through the VR device, the first video stream and the second video stream can be processed in advance and stored. When the user watches the on-demand video through the VR device, it only needs to distribute the to-be-played frame portion to the user through the real-time distribution service, so that the system has the effect of high concurrency, and different users can watch pictures of different viewing angles of different on-demand videos through the real-time distribution service.

The high concurrency refers to that: on one hand, a plurality of servers may be provided to realize real-time distribution service, and a plurality of servers may support high concurrency through scheduling; and on the other hand, because the real-time distribution service only needs to deliver the to-be-played frame portion to the user, the required computing power is small. Therefore, the concurrency amount of a single server is increased by reducing the computing power of the single server and the downlink bandwidth occupied by the to-be-played frame portion. It should be noted that the concurrency amount of the single server is increased by reducing the computing power of the single server and the downlink bandwidth occupied by the frame portion to be played, which also has the effect of reducing the use cost of the server.

The flow in FIG. 1 is described in detail below.

In the above step S102, a video stream to be processed is acquired. The to-be-processed video stream is an on-demand video stream, and the to-be-processed video stream includes a plurality of video frames. In one embodiment, each of the plurality of video frames is a panoramic video frame, which is a 360-degree panoramic video frame, and correspondingly, the video stream is a 360-degree panoramic video stream. In other embodiments, the video stream may also be a wide-angle video stream for a further angle, for example, a video stream of 270 degrees or 180 degrees. Here, the field of view angle of each video frame in the plurality of video frames in the video stream to be processed may be predetermined to be greater than the field of view angle of the video playback device. For example, the field of view angle of the video playback device is 90 degrees, then the field of view angle of each video frame in the plurality of video frames in the to-be-processed video stream is greater than 90 degrees, and such a video stream with the field of view being greater than the field of view angle of the video playback device is used as the to-be-processed video stream.

In the above step S104, each of the plurality of video frames is partitioned into a plurality of video frames, wherein a field of view angle of each video frame obtained by partitioning is greater than a field of view angle of the video playback device at the user side.

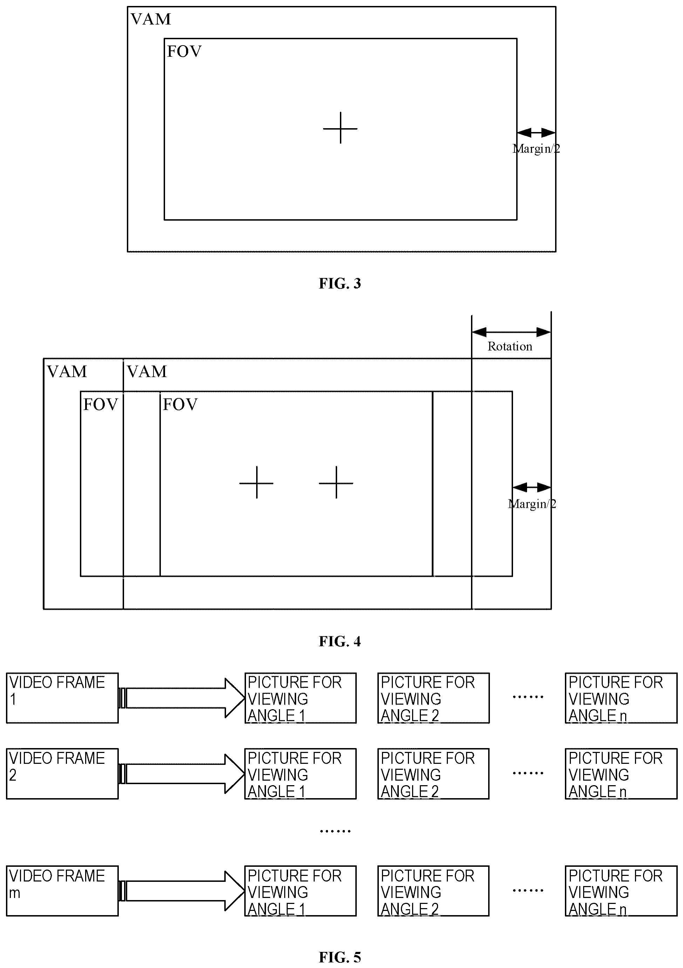

In an embodiment, the frame portion obtained by partitioning is referred to as VAM (Visible Area + Margin). When the video playback device is a VR device, a field of view angle of the video playback device may be represented by a field of view (FOV) of the VR device. The field of view angle corresponding to the VAM is greater than the field of view angle of the video playback device. In the VAM picture, the field of view angle of the visible area is equal to the field of view of the video playback device, and the margin is the exceeding field of view angle of the VAM image relative to the video playback device. FIG. 3 is a schematic diagram of a frame portion obtained by partitioning according to an embodiment of the present disclosure. As shown in Fig. 3, the field of view angle of the frame portion VAM is larger than a field of view angle of the VR device.

Setting the field of view angle of the frame portion obtained through partitioning to be larger than the field of view angle of the video playback device the VR device, and transmitting the frame portion to the VR device for video-on-demand play have two benefits: 1. since the frame portion is obtained from the video frame through partitioning, the resolution of the frame portion is smaller than the resolution of the video frame, the code rate of network transmission is effectively reduced by using the frame portion to replace the video frame and transmitting it to the VR device for video-on-demand; and 2. when the user wears the VR device to watch the on-demand video and move the head in a small range, the VR device can directly use the margin region Margin in the frame portion to perform local rendering, so as to serve the small-range head movement of the user without obtaining a new frame portion from the backend, so that the delay of picture updating is controlled to be within a predetermined duration such as 25ms, and the user is prevented from feeling that the picture is stuck or even feeling dizzy.

In an embodiment, partitioning each of the plurality of video frames into the plurality of frame portions comprises:

obtaining frame portion partitioning parameters, the frame portion partitioning parameters comprising a resolution of the frame portion, a scaling factor of the frame portion relative to the video frame, a field of view angle margin of the field of view angle of the frame portion relative to the field of view angle of the video playback device, the field of view angle of the video playback device, and a viewing angle spacing between the frame portions with adjacent viewing angles; partitioning each of the plurality of video frames into the plurality of frame portions based on the frame portion partitioning parameters.

Specifically, the frame portion partitioning parameters include the resolution of the frame portion, a scaling factor of the frame portion relative to the video frame, a field of view angle of the video playback device, a field of view angle margin of a field of view angle of the frame portion relative to a field of view angle of the video playback device, and a viewing angle spacing between two frame portions with adjacent viewing angles. Through these parameters, a video frame in the video stream can be accurately partitioned to obtain frame portions.

It can be seen that in this embodiment, the resolution of the frame portion, the scaling factor of the frame portion relative to the video frame, the field of view angle margin of the field of view angle of the frame portion relative to the field of view angle of the video playback device, the field of view angle of the video playback device, and the viewing angle spacing between the frame portions with adjacent viewing angles may be determined as the frame portion partitioning parameters, so that the video frame is accurately partitioned based on the frame portion partitioning parameters to obtain different frame portions.

In an embodiment, the resolution of the frame portion, the scaling factor of the frame portion relative to the video frame, the field of view angle margin of the field of view angle of the frame portion relative to the field of view angle of the video playback device are determined by:

obtaining a first value range of the resolution of the frame portion, a second value range of the scaling factor, and a third value range of the field of view angle margin, that are predetermined; obtaining a constraint condition for the resolution of the frame portion, the scaling factor, and the field of view angle margin, the constraint condition indicating a ratio of the resolution of the frame portion to the scaling factor minus the field of view angle of the video playback device is equal to the field of view angle margin; determining the resolution of the frame portion satisfying the constraint condition, the scaling factor satisfying the constraint condition, and the field of view angle margin satisfying the constraint condition within the first value range, the second value range, and the third value range, respectively.

First, a predetermined first value range of a resolution of a frame portion is obtained. The resolution may be denoted as $Crop_{pitch}$ and $Crop_{yaw}$, which indicate the resolution of the frame portion in the pitch direction and the yaw direction, respectively. The higher the resolution is, the clearer the frame portion is, but the larger the size of the frame portion is, and the higher the transmission code rate is. The first value range may represent a maximum value and a minimum value of the resolution in the pitch direction, and a maximum value and a minimum value representing the resolution in the yaw direction.

Then, a predetermined second value range of the scaling factor of the frame portion relative to the video frame is obtained. The scaling factor is denoted as Scale_factor, the scaling factor is not distinguished in the yaw and pitch directions, and an equal scaling is employed. The second value range may be (0, 1], the larger the value is, the lower the scaling degree, the less the picture information covered by the frame portion at the same resolution, but the higher the definition of the image. The smaller the value is, the higher the scaling degree, the more picture information covered by the frame portion at the same resolution, but the lower the definition of the picture. When the scaling factor is 1, it indicates that the frame portion is not scaled. In order to match different usages of the VR device, a plurality of values of the scaling factor may be set, which not only meets the requirement of the user to view the high-definition picture, but also meets the requirement of the user to view more picture information.

Then, a predetermined third value range of the field of view angle margin of the video frame relative to the field of view angle of the video playback device is obtained, that is, the third value range of the above-mentioned margin region Margin. Margin is distinguished in the yaw direction and the pitch direction, the larger the Margin value is, the larger network delay can be covered, the more difficult a switching between the VAM and the frame portion occurs, and the smaller the number of VAMs, i.e., the frame portions, the smaller the storage pressure, but the transmission code rate is increased, and the definition at the same resolution is reduced. Margin is divided into $Margin_{pitch}$ and $Margin_{yaw}$, which represent the frame size in the pitch direction and the frame size in the yaw direction, respectively.

Then, a constraint condition for the resolution, the scaling factor, and the field of view angle margin is obtained. The constraint condition is used to indicate that a ratio result of the resolution to the scaling factor minus the field of view angle of the video playback device is equal to the field of view angle margin. The field of view angle FOV of the video playback device is a fixed value, and after the model of the video playback device is determined, the FOV is also determined. FOV includes $FOV_{pitch}$ and $FOV_{yaw}$, representing a pitch angle and a yaw angle, respectively. The constraint condition may be represented by the following formulas (1), (2), (3), and (4):

$$view\_coverage_{yaw} = \frac{crop_{yaw}}{Scale\_factor} \qquad (1)$$

$$view\_coverage_{pitch} = \frac{crop_{pitch}}{Scale\_factor} \qquad (2)$$

$$view\_coverage_{yaw} - FOV_{yaw} = Margin_{yaw} \qquad (3)$$

$$view\_coverage_{pitch} - FOV_{pitch} = Margin_{pitch} \qquad (4)$$

Finally, the resolution satisfying the constraint condition, the scaling factor satisfying the constraint condition, and the field of view angle margin satisfying the constraint condition are determined within the first value range, the second value range, and the third value range, respectively.

In an embodiment, the foregoing scaling factor may be predetermined to have two values, 1 and 0.3, respectively. Of course, the scaling factor may also be a fixed value. The scaling factor may be adjusted by the user in the VR device, or the backend may automatically switch different scaling factors based on the network situation. Then, the value of the resolution and the value of the field of view angle margin Margin are determined based on the first value range, the third value range, and the constraint formula (1) - (4). The optimal value of the field of view angle margin Margin is about 35 degrees.

It can be seen that, according to this embodiment, the resolution of the frame portion, the scaling factor of the frame portion relative to the video frame, the field of view angle of the field of view of the frame portion relative to the field of view angle of the video playback device can be accurately determined based on the first value range of the resolution, the second value range of the scaling factor, and the third value range of the field of view angle margin, and the constraint condition for the resolution, the scaling factor, and the field of view margin.

In an embodiment, the viewing angle spacing is determined by: determining the viewing angle spacing between the frame portions with adjacent viewing angles based on the field of view angle margin and a field of view angle of each of the video frames. In this embodiment, based on the field of view angle margin and the field of view angle of each video frame, the viewing angle spacing between the frame portions with adjacent viewing angles can be accurately determined, and then the frame portion partitioning parameters can be accurately determined.

In an embodiment, after obtaining the resolution of the frame portion, the scaling factor of the frame portion relative to the video frame, the field of view angle margin of the field of view angle of the frame portion relative to the field of view angle of the video playback device, and the field of view angle of the video playback device, determining the viewing angle spacing between the frame portions with adjacent viewing angles based on the field of view angle margin and the field of view angle of each of the video frames comprises:

obtaining a first constraint condition for the viewing angle spacing, the first constraint condition indicating that the viewing angle spacing is less than or equal to the field of view angle margin;
obtaining a second constraint condition for the viewing angle spacing, the second constraint condition indicating that the field of view angle of each of the video frames is divisible by the viewing angle spacing;
determining the viewing angle spacing based on the first constraint condition for the viewing angle spacing and the second constraint condition for the viewing angle spacing.

FIG. 4 is a schematic diagram of a viewing angle spacing according to an embodiment of the present disclosure. As shown in FIG. 4, the viewing angle spacing between two adjacent frame portions VAM may be denoted as Rotation. FIG. 4 also illustrates the margin area Margin/2 of the frame portion VAM on the right.

First, a first constraint condition for a viewing angle spacing is obtained, where the first constraint condition indicates that a viewing angle spacing is less than or equal to a field of view angle margin. The first constraint condition for the viewing angle spacing Ration may be represented by the following formula (5).

$$Rotation <= Margin \qquad (5)$$

Since Margin is divided into $Margin_{pitch}$ and $Margin_{yaw}$ which represent the margin size in the pitch direction and the margin size in the yaw direction respectively, Ration is also divided into $Rotations_{pitch}$ and $Rotation_{yaw}$, which represent the view angle spacing size in the pitch direction and the view angle spacing size in the yaw direction, respectively. In either direction, the viewing angle spacing is less than or equal to the field of view angle margin.

Then, a second constraint condition for the viewing angle spacing is obtained, where the second constraint condition indicates that the field of view angle of each video frame is divisible by the viewing angle spacing. The second constraint for the viewing angle spacing Rotation may be represented by the following formulas (6) and (7).

$$360 \mod Rotation_{yaw} = 0 \tag{6}$$

$$180 \mod Rotation_{pitch} = 0 \tag{7}$$

Formulas (6) and (7) are illustrated taking an example where the video stream to be processed is of a field of view angle of 360 degrees multiplied by 180 degrees, and either direction, the field of view angle is divisible by the viewing angle spacing.

Finally, the viewing angle spacing is determined based on the first constraint condition of the viewing angle spacing and the second constraint condition of the viewing angle spacing.

In this embodiment, the viewing angle spacing is set to be less than or equal to the field of view angle margin, so that the field of view angle FOV of the video playback device can be always covered by each frame portion that is obtained by partitioning based on the viewing angle spacing. Specifically, if the head movement amount of the user in the VR device is within the field of view angle margin, a picture required by the user may be rendered in the currently delivered frame portion, and if the head movement amount of the user in the VR device exceeds the field of view angle margin, a frame portion for the adjacent viewing angle needs to be delivered to the user. As shown in FIG. 4, since the viewing angle spacing between the frame portion of the adjacent viewing angle and the currently delivered frame portion is less than or equal to the field of view angle margin, the picture to be seen after the user's head movement may be rendered from the adjacent frame portion, so that regardless of the movement of the user's head, the required picture may be rendered from the currently delivered frame portion or the frame portion of the adjacent viewing angle without splicing different frame portions, thereby improving the efficiency of displaying picture by the VR device.

In this embodiment, the field of view angle of the video frame is set to be divisible by the viewing angle spacing, and thus it can be ensured that there is as little overlap between the frame portions VAM as possible, and the picture center points of the frame portions VAM are evenly distributed as much as possible. It can be understood that each frame portion this is obtained by partitioning based on the viewing angle spacing covers all the field of view angles of the video frame.

Therefore, through this embodiment, the view angle spacing obtained based on the above first constraint condition and the second constraint condition can ensure that regardless of the movement of the user's head, the required picture may be rendered from the currently delivered frame portion or the frame portion of the adjacent viewing angle without splicing different frame portions, thereby improving the efficiency of displaying picture by the VR device. In addition, it can be ensured that the frame portions VAM overlap as little as possible, and the picture center points of the frame portions VAM are evenly distributed as much as possible.

In an embodiment, when the values of the positions of the picture center points of all the frame portions are calculated based on the viewing angle spacing, for example, the viewing angle spacings in the pitch direction and the yaw direction are all 20 degrees, the picture center points of the frame portions are calculated from (0, 0), which are (0, 0), (0, 20), (0, 40), ..., (20, 20), (20, 40),... etc. For the panoramic video stream, the frame portion VAM is partitioned at each interval of $Rotation_{pitch}$ and $Rotation_{yaw}$ in the range of [0, 360) and [0, 180]. According to the characteristics of an ERP (Equirectangular Protection) image, only one VAM is needed at the north and south poles, namely pitch = 0 and pitch = 180.

Therefore, the total number of the frame portions VAM is $\left( \frac{360}{Rotation_{yaw}} * \left( \frac{180}{Rotation_{pitch}} - 1 \right) + 2 \right)$.

In this embodiment, the resolution of the frame portion, the scaling factor of the frame portion relative to the video frame, the field of view angle margin of the field of view angle of the frame portion relative to the field of view angle of the video playback device, the field of view angle of the video playback device, and the viewing angle spacing between the frame portions with adjacent viewing angles are determined as the frame portion partitioning parameters.

In an embodiment, partitioning each of the plurality of video frames into the plurality of frame portions based on the frame portion partitioning parameters comprises:

determining a field of view angle of the frame portion based on the field of view angle of the video playback device and the field of view angle margin;

for each video frame of the plurality of video frames, mapping the video frame onto a unit sphere, and scaling, based on the scaling factor, an image obtained with the mapping;

for each video frame of the plurality of video frames, partitioning the scaled image of the video frame based on the field of view angle of the frame portion, the resolution, and the viewing angle spacing to obtain the frame portions of respective viewing angles of the video frame.

First, the field of view angle of the frame portion VAM is determined based on the field of view angle FOV and the field of view angle margin Margin, that is, the size of the VAM in FIG. 3 is determined. As can be seen from FIG. 3, the size of the VAM is equal to the FOV plus the field of view angle margin Margin. Then, for each video frame in the video stream, the video frame is mapped to the unit sphere, and the image obtained with the mapping is scaled based on the scaling factor, and if there are a plurality of values of the scaling factor, the image obtained with the mapping is scaled based on each value of the scaling factor for once. Finally, for each video frame, the scaled image of the video frame is partitioned based on the field of view angle of the video frame VAM, the resolution and the viewing angle spacing, to obtain the frame portions of respective viewing angles of the video frame.

In this embodiment, the video frame is firstly mapped to the unit sphere, and the image obtained with the mapping is scaled according to the scaling factor, and then the scale image is partitioned according to the field of view angle, resolution and viewing angle spacing of the frame portion, to obtain frame portions of respective viewing angles. Through partitioning the scaled image, it can be ensured that the frame portion seen by the user is a scaled image, which meets the requirement of the user for zooming.

In an embodiment, partitioning the scaled image of the video frame based on the field of view angle of the frame portion, the resolution, and the viewing angle spacing to obtain the frame portions of respective viewing angles of the video frame comprises:

aligning a picture center point of the frame portion with a center point of the scaled image of the video frame, and partitioning the scaled image of the video frame based on the resolution and the field of view angle of the frame portion to obtain the frame portion for a reference viewing angle of the video frame;

moving the picture center point of the frame portion on the scaled image of the video frame based on the viewing angle spacing, and partitioning the scaled image of the video frame based on the resolution and a field of view angle of the frame portion after the moving to obtain the frame portion for a further viewing angle of the video frame.

First, the picture center point of the frame portion is aligned with the center point of the scaled image of the video frame, and the scaled image of the video frame is partitioned according to the predetermined resolution and the field of view angle of the frame portion, to obtain an image whose field of view angle is equal to the field of view angle of the frame portion and whose resolution is equal to the predetermined resolution, and this image picture is the frame portion for the reference viewing angle of the video frame.

Then, the picture center point of the frame portion is moved on the scaled image of the video frame based on the viewing angle spacing, the preceding partitioning action is repeated, and partitioning the scaled image of the video frame based on the resolution and the field of view angle of the frame portion after the moving, to obtain an image whose field of view angle is equal to the field of view angle of the frame portion and whose resolution is equal to the predetermined resolution, and this image is a frame portion for a further viewing angle of the video frame. After the picture center point of the frame portion is moved once per view angle spacing, a frame portion for one further view angle is obtained. The picture center point of the frame portion is moved multiple times according to the viewing angle spacing, until all the image content of the scaled image is partitioned.

Through the above process, any video frame may be partitioned to obtain frame portions of respective viewing angles. In other embodiments, the scaled image may also be moved according to the viewing angle spacing, so that a frame portion for a further viewing angle is obtained from the scaled image after the movement.

In an embodiment, after the picture center point of the frame portion is aligned with the center point of the scaled image, the position of the picture center point of the frame portion is determined as (0, 0), and after the picture center point of the frame portion is moved on the scaled image according to the viewing angle spacing, the position of the picture center point after the movement is determined according to the viewing angle spacing and the initial position (0, 0), so that the position of the picture center point of each frame portion obtained by partitioning is determined based on the viewing angle spacing.

In another embodiment, after the viewing angle spacing is determined in advance, the picture center point of each frame portion is also determined, and the coordinates of the picture center points of the frame portions with adjacent viewing angles may be sequentially determined according to the viewing angle spacing in different directions starting from (0, 0), for example, the viewing angle spacings in different directions are all 20 degrees, and the picture center points of the respective frame portions are (0, 0), (0, 20), (0, 40), ⋯, (20, 20), (20, 40), ⋯, etc.

It can be seen that the position of the picture center point of the frame portion determined based on the viewing angle spacing can represent the viewing angle information of the frame portion. Through the above process, for any video frame, frame portion for a plurality of view angles can be obtained through partitioning, and a position of a picture center point of a frame portion corresponding to frame portions for different viewing angles are different.

In this embodiment, the field of view angle of the frame portion is directly proportional to the network delay, the scaling level of the video frame mapped to the unit sphere determines the definition of the frame portion and the resolution of the frame portion determines the size of the frame portion. In aid of the embodiment, the frame portions for different viewing angles can be accurately obtained through partitioning the video frame based on the viewing angle spacing, and the partitioning efficiency is high.

FIG. 5 is a schematic diagram of partitioning a video frame in a video stream to obtain frame portions according to an embodiment of the present disclosure. As shown in FIG. 5, for each video frame in the video stream, a plurality of frame portions are obtained through partitioning, and each frame portion corresponds one-to-one to each viewing angle. n and m are positive integers greater than or equal to 1.

In the process of FIG. 1, after respective frame portions of each video frame are obtained, step S106 is performed, for frame portions among the plurality of frame portions that have a same picture center point position, a first video stream and a second video stream are generated based on a sequential order of playback timestamps of the frame portions. That is, for frame portions with the same viewing angle in the plurality of frame portions, for example, frame portions with the same viewing angle in FIG. 5, the first video stream and the second video stream are generated according to a sequential order of playback timestamps of the frame portions. A first group of pictures (GOP) of the first video stream is a standard GOP, and a length of the second group of pictures (GOP) of the second video stream is less than a length of the first group of pictures (GOP) of the first video stream.

In an embodiment, generating, for the frame portions among the plurality of frame portions that have the same picture center point position, the first video stream and the second video stream based on the sequential order of playback timestamps of the frame portions comprises:

for the frame portions among the plurality of frame portions that have the same picture center point position, arranging the frame portions based on the sequential order of playback timestamps of the frame portions to obtain an initial video stream;

converting the initial video stream into the first video stream and the second video stream respectively, the first group of pictures (GOP) of the first video stream comprising an I-frame and at least two P-frames, and the second group of pictures (GOP) of the second video stream comprising an I-frame and at most two P-frames.

Specifically, firstly, in respective frame portions of each video frame, frame portions corresponding to the same view angle, that is, frame portions with the same picture center point position, are arranged according to a sequential order of playback timestamps to obtain an initial video stream for each view angle, and then the initial video streams for respective view angles are encoded into the first video stream and the second video stream, respectively.

For example, there are totally 10 video frames, each video frame is partitioned to obtain frame portions for 30 viewing angles, and 30 viewing angles corresponding to respective video frames are the same. Then, according to a sequential order of playback timestamps, 10 frame portions (from each video frame) for the first viewing angle are arranged to obtain an initial video stream for the first viewing angle, 10 frame portions for the second viewing angle are arranged to obtain an initial video stream for the second viewing angle, and so on. Initial video streams for 30 viewing angles are obtained, and then the initial video streams for each viewing angle are encoded into a first video stream and a second video stream respectively.

A GOP (Group of Pictures) is a group of consecutive pictures in an MPEG encoded video or video stream, beginning with an I-frame and ending until a next I-frame. An I-frame (intra coded picture), also referred to as an intra coded frame, is a key frame, and is an independent frame with all information, and can be independently decoded without referring to other pictures, which can be simply regarded as a static picture. A P-frame (Predictive Coded Picture): also referred to as an inter predictive coded frame, can be encoded by referring to a previous I-frame. It represents the difference between the current frame of picture and the previous frame (the previous frame may be an I-frame or a P-frame). When decoding, a difference defined for the current frame needs to be superimposed with a previously buffered picture to generate a final picture. Compared to an I-frame, the P-frame usually occupies less data bits, but the drawback is that since the P-frame has complex dependency on the previous P and I reference frames, it is very sensitive to the transmission error. A B frame (Bidirectionally-Predictive Coded Picture): also known as a Bidirectional Predictive Coded frame, that is, a B frame records the difference between the current frame and the previous frame. That is, to decode the B frame, not only the previous buffered picture needs to be obtained but also a following frame needs to be decoded, and the final picture is obtained by superimposing the data of the current frame and the preceding and following frames. The compression rate of a B frame is high, but the requirement on decoding performance is high.

In this embodiment, the first group of pictures (GOP) of the first video stream is a standard GOP, and the standard GOP is any GOP compatible with the existing codec standard (for example, H264, H265···), for example, a GOP having one I-frame being followed by a plurality of P-frames· A length of the second group of pictures (GOP) of the second video stream is less than a length of the first group of pictures (GOP) of the first video stream. That is, the number of frames comprised in a GOP of the second video stream is less than the number of frames comprised in a GOP of the first video stream. In one case, the first group of pictures (GOP) of the first video stream includes one I-frame and at least two P-frames, and the second GOP of the second video stream includes one I-frame and at most two P-frames.

The frame structure of the first video stream may be referred to as an IPP-frame structure, indicating that one GPO includes one I-frame and at least two P-frames. The frame structure of the second video stream is referred to as an IP-frame structure, indicating that a GOP includes an I-frame and at most two P-frames. After the initial video stream for each view angle are obtained, each frame portion in the initial video stream of each view angle is encoded to obtain a frame portion of the IPP-frame structure, and each frame portion in each video stream is encoded to obtain a frame portion of the IP-frame structure. That is, each frame portion in the initial video stream of each view angle is encoded as an I-frame or a P-frame. After encoding, the number of frame portions in the first video stream is equal to the number of frame portions in the second video stream and is equal to the number of frame portions in the video stream for each viewing angle.

In this embodiment, for the IPP-frame structure, one GOP includes an I-frame and at least two P-frames, and for an IP-frame structure, one GOP includes one I-frame and at most two P-frames. Moreover, in the IPP-frame structure and the IP-frame structure, there are no B frames, and in the IPP-frame structure and the IP-frame structure, each video frame is only encoded with reference to the previous video frame.

In this embodiment, the initial video stream of each view angle is converted into the IPP stream (the first video stream) and the IP stream (the second video stream) respectively, so that when the user watches the on-demand video, the frame portion is sent to the user at the frame level, switching of the viewing angle is achieved, the operation pressure of distributing the frame portion by the server is reduced, the picture delivering delay is reduced, and the user experience is improved.

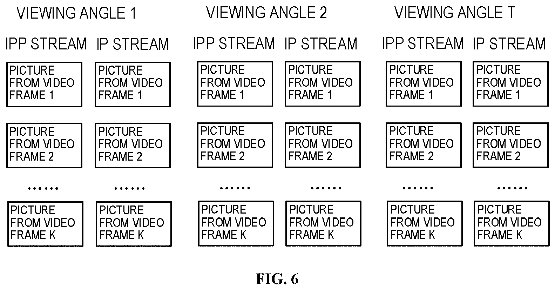

FIG. 6 is a schematic diagram of an IPP stream and an IP stream according to an embodiment of the present disclosure. As shown in FIG. 6, each view angle has an initial video stream, the initial video stream for each viewing angle can be encoded into an IPP stream and an IP stream respectively, resulting in one IPP stream and one IP stream for each viewing angle. K and T are positive integers greater than or equal to 1.

In an embodiment, after generating the first video stream and the second video stream, the method further comprises:

for the first video stream and the second video stream generated from the frame portions among the plurality of frame portions that have the same picture center point position, naming each frame portion in the first video stream and each frame portion in the second video stream based on the picture center point position, an identifier of the first group of pictures (GOP), an identifier of the second group of pictures (GOP), and a frame portion sequence number setting rule, to obtain name information;

storing the first video stream and the second video stream based on the name information of each frame portion in the first video stream and the name information of each frame portion in the second video stream.

Specifically, for the first video stream generated by the frame portions having the same picture center point position in the plurality of frame portions, that is, for each frame portion in the IPP stream for each view angle, according to the picture center point position of the frame portion, the identifier of the first group of pictures (GOP), for example, the identifier of the IPP-frame structure and the predetermined frame portion sequence number setting rule, each frame portion in the IPP stream for each view angle is named, the name information obtained by naming includes the picture center point position of the frame portion, the identifier of the IPP-frame structure, and the frame portion sequence number. The frame portion sequence number setting rule may be setting the frame portion sequence number from 0.

Similarly, for the second video stream generated by the frame portion having the same picture center point position in the plurality of frame portions, that is, for each frame portion in the IP stream for each view angle, according to the picture center point position of the frame portion, the identifier of the second group of pictures (GOP), such as the identifier of the IP-frame structure and the predetermined frame portion sequence number setting rule, each frame portion in the IP stream for each view angle is named, the name information obtained by naming includes the picture center point position of the frame portion, the identifier of the IP-frame structure, and the frame portion sequence number. The frame portion sequence number setting rule may be setting the frame portion sequence number from 0.

Then, the first video stream and the second video stream are stored according to the name information of each frame portion in the first video stream and the name information of each frame portion in the second video stream.

It can be seen that, in this embodiment, the name of each frame portion in the first video stream and the second video stream can be determined based on the picture center point position, the identifier of the first group of pictures (GOP), the identifier of the second group of pictures (GOP), and the frame portion sequence number setting rule, so that the picture center point position, the frame structure and the sequence number of each frame portion can be determined from the name, so that each frame portion is conveniently distinguishable.

In a specific embodiment, the process of steps S102-S106 is completed before the user watches the on-demand video, and the first video stream and the second video stream are stored in the NFS. In a case that the process of steps S102-S106 is performed by the first server, in a video-on-demand scenario, the first server may select a to-be-played frame portion from the stored first video stream and the stored second video stream and send the to-be-played frame portion to the video playback device, or a further servers other than the first server may select the to-be-played frame portion from the stored first video stream and the stored second video stream and send the to-be-played frame portion to the video playback device.

When there are a plurality of values for the scaling factor of the frame portion relative to the video frame, for the initial video stream at the same picture center point position, it further includes a plurality of sub-streams, corresponding to the value of each scaling factor, and each sub-stream is converted into a first video stream and a second video stream respectively. In this case, when the first video stream and the second video stream are stored in the NFS, the following directory structure may be used for storage, so as to quickly find the required frame portion. The target structure comprises: a first layer: setting the total folder to represent the entry of the video stream; a second layer: naming the folder by using the picture center point position, the value of the scaling factor and the identifier of the frame structure; wherein the picture center point position comprises the pitch angle coordinate and the yaw angle coordinate. The third layer: stores a corresponding frame portion(s) according to the frame portion sequence number in each folder.

It can be seen that, in this example, when there are a plurality of values of the scaling factor, the first video stream and the second video stream may be further stored in combination with the values of the scaling factor.

After the first video stream and the second video stream are obtained, in step S108, the video playback parameter of the video playback device is obtained, and the to-be-played frame portion is determined from the first video stream and the second video stream based on the video playback parameter of the video playback device and delivered to the video playback device.

In an embodiment, when each panoramic video frame in the panoramic video stream is partitioned into a plurality of video frames. For each panoramic video frame, each frame portion corresponds to one picture center point position, that is, a viewing angle, and viewing angles of respective frame portions may cover all contents of the panoramic video frame. When the first video stream and the second video stream for each view angle are generated and stored, the first video stream is stored in the format of H265, the second video stream is stored in the format of H264. When the frame portion is distributed, it is not necessary to perform transcoding again, thereby saving time and computing power of the server, and supporting concurrent access of the distribution service. The distribution server may use an ARM architecture, thereby further reducing the cost of the server. When the to-be-played frame portion is sent to the user, the to-be-played frame portion may be obtained from the memory and sent to the video playback device at a time interval of 1/fps, and the video playback device does not need to perform additional work, and only needs to decode and play.

In an embodiment, determining the frame portion to be played from the first video stream and the second video stream based on the video playback parameter of the video playback device comprises:

determining, based on the video playback parameter, whether a coordinate of a picture center point of the frame portion to be played is the same as a coordinate of a picture center point of the last frame portion already played; in accordance with a determination that the coordinate of the picture center point of the frame portion to be played is different from the coordinate of the picture center point of the last frame portion already played, determining, based on a frame portion sequence number of the frame portion to be played, a video stream to which the frame portion to be played belongs, or in accordance with a determination that the coordinate of the picture center point of the frame portion to be played is the same as the coordinate of the picture center point of the last frame portion already played, determining, based on a video stream to which a historical frame portion already played belongs, a video stream to which the frame portion to be played belongs; selecting, from the determined video stream, a frame portion whose frame portion sequence number is equal to the frame portion sequence number of the frame portion to be played as the frame portion to be played.

In this embodiment, first, whether the coordinate of the picture center point of the frame portion to be played is the same as the coordinate of the picture center point of the last frame portion already played is determined according to the video playback parameter, and if the coordinate of the picture center point of the frame portion to be played is the same as the coordinate of the picture center point of the last frame portion already played, it indicates that the switching field of view angle is not involved with the head movement of the user, and if the coordinates of the picture center point of the frame portion to be played is different from the coordinate of the picture center point of the last frame portion already played, it indicates that the switching field of view angle is involved with the head movement of the user. The purpose of this step is to determine whether a frame portion with a viewing angle different from the last frame portion already played needs to be selected from the first video stream and the second video stream to be sent to the user.

Here, it is necessary to simply distinguish the viewing angle of the user and the viewing angle of the frame portion in the first video stream and the second video stream. When the user watches the on-demand video in the VR device, for the user, any head movement action of the user causes a change in the viewing angle, and accordingly, the viewing angle displayed by the VR device also changes. However, due to the existence of the field of view angle margin described above, it is not necessarily need to select, from the first video stream and the second video stream, a frame portion that is different from the viewing angle of the last frame portion that has been played to the user.

Therefore, it is determined whether the viewing angle of the frame portion to be played is the same as the viewing angle of the last frame portion already played according to the video playback parameter, that is, it is determined whether the coordinate of the picture center point of the frame portion to be played is the same as the coordinate of the picture center point of the last frame portion already played, and if the coordinate of the picture center point of the frame portion to be played is different from the coordinate of the picture center point of the last frame portion already played, it indicates that the a frame portion with a viewing angle different from the last frame portion already played needs to be selected from the first video stream and the second video stream and sent to the user. If the coordinate of the picture center point of the frame portion to be played is the same as the coordinate of the picture center point of the last frame portion already played, it indicates that it is not necessary to select a frame portion with a viewing angle different from the last frame portion already played from the first video stream and the second video stream.

Then, in a case where the viewing angles are different, the video stream to which the frame portion to be played belongs is determined according to the frame portion sequence number of the frame portion to be played, and in the case that the viewing angles are the same, the video stream to which the frame portion to be played belongs is determined according to the video stream to which the historical frame portion already played belongs. Finally, a frame portion with the frame portion sequence number equal to the frame portion sequence number of the frame portion to be played is selected from the determined video stream as the frame portion to be played and sent to the user. The frame portion sequence number of the to-be-played frame portion may be obtained from the video playback parameter of the video playback device.

It can be seen that, in this embodiment, whether the coordinate of the picture center point of the frame portion to be played is the same as the coordinate of the picture center point of the last frame portion already played can be determined according to the video playback parameter, and the frame portion to be played is selected according to the result of the determining, so as to ensure that the situation that the viewing angle needs to be switched is found in time, and deliver the required frame portion to the user in time.

In an embodiment, determining, based on the video playback parameter, whether the coordinate of the picture center point of the frame portion to be played is the same as the coordinate of the picture center point of the last frame portion already played comprises:

extracting a coordinate of a picture center point of the video playback device from the video playback parameter;
determining the coordinate of the picture center point of the frame portion to be played based on the coordinate of the picture center point of the video playback device and a field of view angle margin of the field of view angle of the frame portion relative to the field of view angle of the video playback device;
obtaining the coordinate of the picture center point of the last frame portion already played, and determining whether the coordinate of the picture center point of the frame portion to be played is the same as the coordinate of the picture center point of the last frame portion already played.

The field of view angle margin and the coordinate of the picture center point of the last frame portion already played may be stored in the server, or may be stored in the video playback parameter.

First, a coordinate of the picture center point of the video playback device is extracted from the video playback parameter. The coordinate of the picture center point of the video playback device refers to the pitch angle coordinate and the yaw angle coordinate of the VR device, that is, the pitch angle coordinate and the yaw angle coordinate of the user's viewing angle.

In an embodiment, determining the coordinate of the picture center point of the frame portion to be played based on the coordinate of the picture center point of the video playback device and a field of view angle margin of the field of view angle of the frame portion relative to the field of view angle of the video playback device is specifically:
calculating the coordinate of the picture center point of the frame portion to be played based on the coordinate of the picture center point of the video playback device and the field of view angle margin.

In an embodiment, the coordinate of the picture center point of the frame portion to be played is calculated based on the coordinate of the picture center point of the video playback device and the field of view angle margin according to the following formula:

$$pitch' = \left\lfloor \frac{pitch + \frac{Margin_{pitch}}{2}}{Margin_{pitch}} \right\rfloor * Margin_{pitch}$$

$$yaw' = \left\lfloor \frac{yaw + \frac{Margin_{yaw}}{2}}{Margin_{yaw}} \right\rfloor * Margin_{yaw}$$

In the above formulas, pitch and yaw refer to the coordinates of the picture center point of the video playback device, $Margin_{pitch}$ and $Margin_{yaw}$ represent the field of view angle margin in the pitch direction and the field of view angle margin in the yaw direction, respectively, *pitch'* and *yaw'* refer to the coordinate of the picture center point of the frame portion to be played.

In this embodiment, a coordinate of the picture center point of the last frame portion already played is further acquired, and this information may be pre-stored in the server or stored in the video play parameter. Then, it is determine whether the coordinate of the picture center point of the frame portion to be played is the same as the coordinate of the picture center point of the last frame portion already played; if the coordinate of the picture center point of the frame portion to be played is the same as the coordinate of the picture center point of the last frame portion already played, it is determined that the viewing angle of the frame portion to be played is the same as the viewing angle of the last frame portion already played; if the coordinate of the picture center point of the frame portion to be played is different from the coordinate of the picture center point of the last frame portion already played, the view angle of the frame portion to be played is determined to be different from the view angle of the last frame portion already played.

It can be seen that, in this embodiment, the coordinate of the picture center point of the to-be-played frame portion can be determined according to the coordinate of the picture center point of the video playback device and the field of view angle margin of the field of view angle of the frame portion relative to the field of view angle of the video playback device. That is, the viewing angle of the to-be-played frame portion is accurately determined, so as to determine whether the viewing angle of the to-be-played frame portion is the same as the viewing angle of the last frame portion that has been played, so as to ensure that the situation that the viewing angle needs to be switched is found in time, and deliver the required frame portion to the user in time.

In an embodiment, when the viewing angle needs to be switched, determining, based on the frame portion sequence number of the frame portion to be played, the video stream to which the frame portion to be played belongs comprises:

    obtaining a predetermined multiple of a length of the second group of pictures (GOP) of the second video stream, and calculating a remainder of dividing the frame portion sequence number of the frame portion to be played by the predetermined multiple of the length;

    in accordance with a determination that the remainder is a predetermined value, determining the second video stream having the same coordinate of the picture center point as the coordinate of the picture center point of the frame portion to be played as the video stream to which the frame portion to be played belongs;

    in accordance with a determination that the remainder is not the predetermined value, determining a video stream to which the last frame portion already played belongs as the video stream to which the frame portion to be played belongs.

Specifically, when the viewing angle of the frame portion to be played is different from the viewing angle of the last frame portion already played, the predetermined multiple of the length of the second group of pictures (GOP) of the second video stream is acquired. For example, the second frame structure is an IP structure, one GOP includes one I-frame and one P-frame, then the standard maximum frame number of the frame group of the second frame structure is 2, that is, the GOP length is equal to 2, and a multiple of 2, 4, 6, and so on may be obtained.

Then, a remainder of dividing the frame portion sequence number of the frame portion to be played by the predetermined multiple is calculated. If the remainder is a predetermined value, for example, 1, the second video stream whose coordinate of the picture center point is the same as the coordinate of the picture center point of the frame portion to be played is determined as the video stream to which the frame portion to be played belongs. It can be seen from the foregoing that, each viewing angle has a first video stream and a second video stream, and the viewing angle of the to-be-played frame portion also has a first video stream and a second video stream, the angle is represented by a position coordinate of the picture center point. When the remainder is a predetermined value, the coordinate of the picture center point is the same as the coordinate of the picture center point of the to-be-played frame portion, that is, the second video stream corresponding to the viewing angle of the to-be-played frame portion is determined as the video stream to which the to-be-played frame portion belongs.

In contrast, if the remainder is not the predetermined value, the video stream to which the last frame portion already played belongs is determined as the video stream to which the frame portion to be played belongs. The video stream to which the last frame portion already played belongs may be the first video stream corresponding to the last frame portion already played or the second video stream corresponding to the last frame portion already played.

It can be seen that, in aid of this embodiment, in a case where viewing angle switching is needed, the video stream to which the to-be-played frame portion belongs can be quickly determined by calculating the remainder of dividing the frame portion sequence number of the to-be-played frame portion by the predetermined multiple of the length of the second group of pictures (GOP) of the second video stream, and comparing the remainder with the predetermined value, so that the process is simple, the calculation efficiency of the server is greatly improved, and the calculation pressure of the server is reduced.

In an embodiment, in a case where viewing angle switching is not needed, determining, based on the video stream to which the historical frame portion already played belongs, the video stream to which the frame portion to be played belongs comprises:

obtaining a predetermined multiple of a length of the second group of pictures (GOP) of the second video stream, and determining a frame portion already played as the historical frame portion such that a spacing between a frame portion sequence number of the frame portion already played and the frame portion sequence number of the frame portion to be played is the predetermined multiple of the length;
determining whether the historical frame portion is in the second video stream whose coordinate of the picture center point is the same as the coordinate of the picture center point of the frame portion to be played, and whether the historical frame portion is in the first video stream whose coordinate of the picture center point is the same as the coordinate of the picture center point of the frame portion to be played;
determining the video stream to which the frame portion to be played belongs based on a result of the determining.

Specifically, the predetermined multiple of the length of the GOP of the second group of pictures (GOP) of the second video stream is obtained. This process is the same as that described above and is not repeated.

Then, a frame portion already played is determined as the historical frame portion such that a spacing between a frame portion sequence number of the frame portion already played and the frame portion sequence number of the frame portion to be played is the predetermined multiple of the length. For example, if the obtained value is 4, and the frame portion sequence number of the frame portion to be played is 16, the historical frame portion is a frame portion that is historically played and has a frame portion sequence number 12.

Then, it is determined whether the historical frame portion is in the second video stream whose coordinate of the picture center point is the same as the coordinate of the picture center point of the frame portion to be played, and whether the historical frame portion is in the first video stream whose coordinate of the picture center point is the same as the coordinate of the picture center point of the frame portion to be played. This step is equivalent to determining whether the historical frame portion is located in the second video stream corresponding to the viewing angle of the to-be-played frame portion, and whether the historical frame portion is located in the first video stream corresponding to the viewing angle of the to-be-played frame portion. Finally, the video stream to which the to-be-played frame portion belongs is determined according to the result of the determining.

It can be seen that, in this embodiment, in a case where viewing angle switching is not needed, the video stream to which the to-be-played frame portion belongs can be quickly determined by determining the historical frame portion and analyzing the video stream where the historical frame portion is located. This process is simple and efficient, and the calculation pressure of the server is reduced.

In an embodiment, determining the video stream to which the frame portion to be played belongs based on the result of the determining comprises:

in accordance with a determination that the historical frame portion is in the second video stream whose coordinate of the picture center point is the same as the coordinate of the picture center point of the frame portion to be played, or the historical frame portion is in the first video stream whose picture center point is the same as the coordinate of the picture center point of the frame portion to be played, determining, as the video stream to which the frame portion to be played belongs, the first video stream whose picture center point is the same as the coordinate of the picture center point of the frame portion to be played;
in accordance with a determination that the historical frame portion is not in the second video stream whose coordinate of the picture center point is the same as the coordinate of the picture center point of the frame portion to be played, and the historical frame portion is not in the first video stream whose picture center point is the same as the coordinate of the picture center point of the frame portion to be played, determining, as the video stream to which the frame portion to be played belongs, the second video stream whose coordinate of the picture center point is the same as the coordinate of the picture center point of the frame portion to be played.

Specifically, each viewing angle has a first video stream and a second video stream, so the viewing angle of the frame portion to be played also has a first video stream and a second video stream. If the historical frame portion is in the second video stream whose coordinate of the picture center point is the same as the coordinate of the picture center point of the to-be-played frame portion, or if the historical frame portion is located in the first video stream whose picture center point is the same as the coordinate of the picture center point of the to-be-played frame portion, that is, if the historical frame portion is in the second video stream corresponding to the viewing angle of the to-be-played frame portion, or if the historical frame portion is in the first video stream corresponding to the viewing angle of the to-be-played frame portion, the first video stream whose picture center point is the same as the coordinate of the picture center point of the frame portion to be played, that is, the first video stream corresponding to the viewing angle of the to-be-played frame portion, is determined as the video stream to which the frame portion to be played belongs.

In contrast, if the historical frame portion is not in the second video stream whose coordinate of the picture center point is the same as the coordinate of the picture center point of the to-be-played frame portion, and the historical frame portion is not in the first video stream whose picture center point is the same as the coordinate of the picture center point of the to-be-played frame portion, that is, if the historical frame portion is not located in the second video stream corresponding to the viewing angle of the to-be-played frame portion, and the historical frame portion is not in the first video stream corresponding to the view angle of the to-be-played frame portion, the second video stream whose coordinate of the picture center point is the same as the coordinate of the picture center point of the frame portion to be played, that is, the second video stream corresponding to the viewing angle of the to-be-played frame portion, is determined as the video stream to which the frame portion to be played belongs.

It can be seen that, in this embodiment, the video stream where the to-be-played frame portion is located can be quickly determined according to the video stream where the historical frame portion is located, the process is simple and efficient, and the server operation pressure is small.

When there are a plurality of value for the scaling factor of the frame portion relative to the video frame, for the initial video stream at the same picture center point position, it further includes a plurality of sub-streams, corresponding to respective values of the scaling factor, and each sub-stream is converted into a first video stream and a second video stream, respectively. In this case, in this embodiment of the present disclosure, the scaling factor of each frame of frame portion sent to the video playback device at the user side is usually the same, however, when there are the following several cases, frame portions with different scaling factors may be sent to the video playback device at the user side:

(1) When the network is stuck, the video playback device on the user side may automatically select, from a plurality of pre-configured scaling factor values, a value different from the currently used scaling factor, and the server sends the frame portion to the video playback device based on this different value;

(2) When the user performs a zooming action, the server determines the value of the corresponding scaling factor according to the operation action and sends the corresponding frame portion;

(3) When the user pauses the video playing, the server automatically switches to a minimum value of the scaling factor, to increase the content information of the picture, so that the user can also switch the picture content when the user pauses or rotates in place;

(4) When the user performs a turn-around quickly, if the server detects an acceleration exceeding a predetermined threshold, the server automatically switches to the minimum value of the scaling factor, so that the picture information is increased for the same field of view, and the probability of image tearing is reduced;

(5) When the last frame of frame portion is being played, if the user does not select a cycle play, the server automatically switches to the minimum value of the scaling factor, thereby increasing the image information seen by the user.

Considering that the above-mentioned cases for switching scaling factor exists in this embodiment, in the foregoing method flow, before determining whether the coordinate of the picture center points of the to-be-played frame portion is the same as the coordinate of the picture center points of the last frame portion already played based on the video playback parameter, it is further determined whether the scaling factor corresponding to the to-be-played frame portion is the same as the scaling factor of the last frame portion already played, and if the scaling factor corresponding to the to-be-played frame portion is the same as the scaling factor of the last frame portion already played, the following act(s) is performed:

determining whether the coordinate of the picture center point of the frame portion to be played is the same as the coordinate of the picture center point of the last frame portion already played based on the video playback parameter;

if the coordinate of the picture center point of the frame portion to be played is different from the coordinate of the picture center point of the last frame portion already played based on the video playback parameter, determining, based on the frame portion sequence number of the frame portion to be played, a video stream to which the frame portion to be played belongs, or if the coordinate of the picture center point of the frame portion to be played is the same as the coordinate of the picture center point of the last frame portion already played based on the video playback parameter, determining, based on the video stream to which the historical frame portion already played belongs, the video stream to which the frame portion to be played belongs;

selecting, from the determined video stream, a frame portion whose frame portion sequence number is equal to the frame portion sequence number of the to-be-played frame portion as the to-be-played frame portion.

If the scaling factor corresponding to the to-be-played frame portion is different from the scaling factor of the last frame portion already played, the following act(s) is performed:

determining, based on the frame portion sequence number of the to-be-played frame portion, a video stream to which the to-be-played frame portion belongs; and selecting, from the determined video stream, a frame portion whose frame portion sequence number is equal to the frame portion sequence number of the to-be-played frame portion as the to-be-played frame portion.

A specific process of this flow may refer to the foregoing description, and details are not repeated herein.

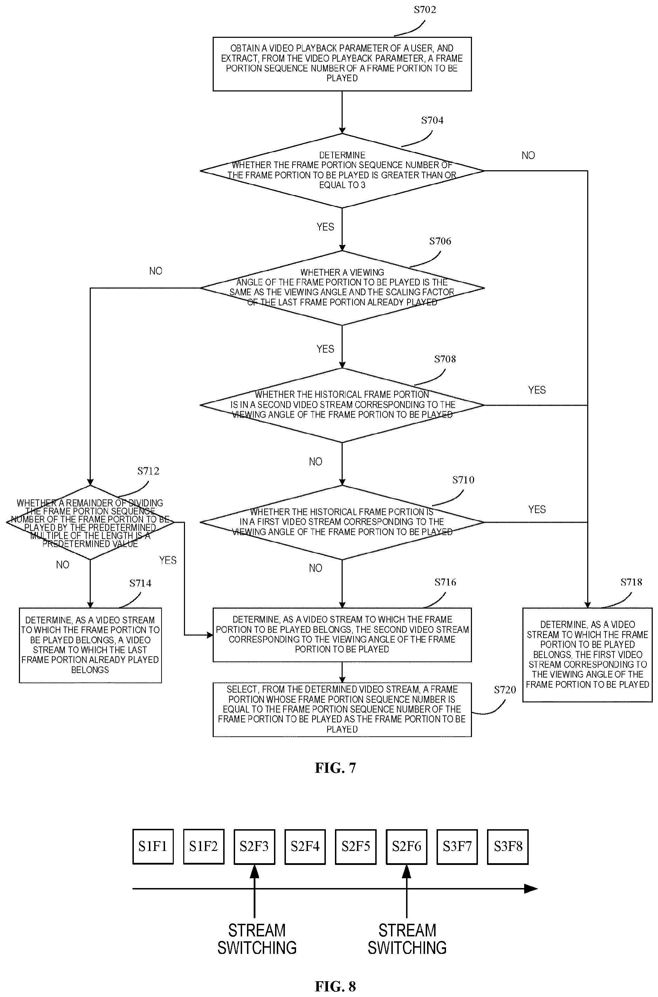

FIG. 7 is a schematic flowchart of selecting a to-be-played frame portion according to an embodiment of the present disclosure. As shown in FIG. 7, the flow includes:

Step S702: obtain a video playback parameter of a user, and extract, from the video playback parameter, a frame portion sequence number of a frame portion to be played;

Step S704: determine whether the frame portion sequence number of the frame portion to be played is greater than or equal to 3;

If yes, perform step S706; otherwise, perform step S718;

Step S706: determining, based on the video playback parameter, whether a viewing angle of the frame portion to be played is the same as the viewing angle and the scaling factor of the last frame portion already played;

If same, step S708 is performed, and if any one is different, step S712 is performed;

Step S708: determine the above-mentioned historical frame portion, and determine whether the historical frame portion is in a second video stream corresponding to the viewing angle of the frame portion to be played;

If yes, perform step S718; if no, perform step S710;

Step S710: determine whether the historical frame portion is in a first video stream corresponding to the viewing angle of the frame portion to be played;

If yes, perform step S718; if no, perform step S716;

Step S712: obtain a predetermined multiple of a length of a second group of pictures (GOP) of the second video stream, and calculate whether a remainder of dividing the frame portion sequence number of the frame portion to be played by the predetermined multiple of the length is a predetermined value;

If yes, perform step S716; if no, perform step S714;

Step S714: determine, as a video stream to which the frame portion to be played belongs, a video stream to which the last frame portion already played belongs;

Step S716: determine, as a video stream to which the frame portion to be played belongs, the second video stream corresponding to the viewing angle of the frame portion to be played;

Step S718: determine, as a video stream to which the frame portion to be played belongs, the first video stream corresponding to the viewing angle of the frame portion to be played;

Step S720: select, from the determined video stream, a frame portion whose frame portion sequence number is equal to the frame portion sequence number of the frame portion to be played as the frame portion to be played.

In FIG. 7, since when the frame portion sequence number of the frame portion to be played is less than 3, the on-demand video is just played a very short time, at this time, the user is not allowed to switch the viewing angle, usually the user will not switch the viewing angle at this time. Therefore, step S718 is performed, and the first video stream corresponding to the viewing angle of the frame portion to be played is determined as the video stream to which the frame portion to be played belongs. For a specific process in FIG. 7, refer to the foregoing description, and details are not repeated herein.

It should be noted that, the first frame structure of the first video stream is the default video playback frame structure of the video playback device, the second frame structure of the second video stream is the auxiliary video playback frame structure of the video playback device. When the frame portion for a different viewing angle is to be sent to the user, or the frame portion in the first video stream cannot be played, the frame portion is preferentially selected from the second video stream, and finally the video playback device still uses the frame portion in the first video stream to implement video playback.

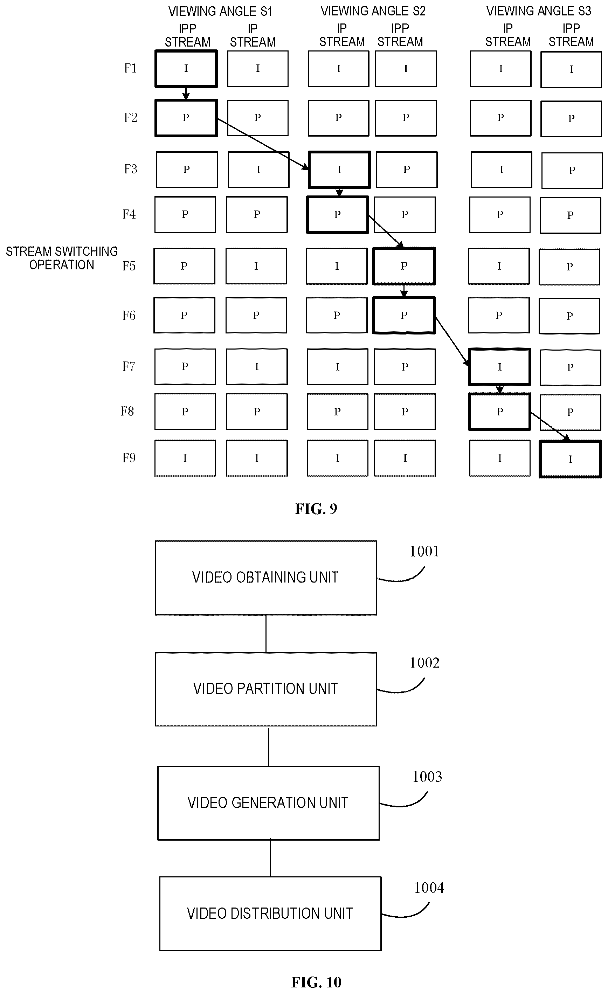

FIG. 8 is a schematic diagram of a user switching a frame portion according to an embodiment of the present disclosure, and FIG. 9 is a schematic diagram of a scenario of selecting a to-be-played frame portion according to an embodiment of the present disclosure. In FIGS. 8 and 9, S represents a viewing angle, and F represents a frame portion

17

sequence number. In FIG. 9, the IPP stream is a first video stream, and the IP stream is a second video stream. Referring to FIG. 8, when the user is about to play the third frame of frame portion, that is, when the frame portion to be played is the third frame of frame portion, a head movement is performed with a large range, so that the server performs a viewing angle switching operation (also referred to as a stream switching operation). Similarly, when the user is about to play the sixth frame of frame portion, that is, when the frame portion to be played is the sixth frame of frame portion, a head movement is performed with a large range, so that the server performs a viewing angle switching operation.

Referring to FIG. 9 and FIG. 7, when switching from the second frame portion frame to the third frame portion frame, the second frame portion frame is located in the first video stream, and according to the method flow in FIG. 7, step S712 is performed, and when the length of the second frame structure is 2, it is determined that the remainder of dividing the frame portion sequence number 3 of the frame portion to be played by the length 2 is the predetermined value 1, so that step S716 and step S720 are performed, and the third frame portion frame is selected from the second video stream corresponding to the viewing angle (that is, the view angle 2) of the frame portion to be played as the frame portion to be played.

Referring to FIG. 9, after the third frame of frame portion is selected from the second video stream corresponding to the view angle 2 as the to-be-played frame portion and played, since the to-be-played frame portion is an I-frame, then the P-frame after the I-frame is played, and after finishing playing the P-frame, jumping to the first video stream corresponding to the view angle 2 to continue playing.

Referring to FIG. 9 and FIG. 7, when switching from the fifth frame portion frame to the sixth frame portion frame, the fifth frame portion frame is located in the first video stream, and according to the method flow in FIG. 7, step S712 is performed, and when the predetermined length of the frame group of the second frame structure is 2, it is determined that the remainder of dividing the frame portion sequence number 6 of the frame portion to be played by 2 is not the predetermined value 1, so that step S714 and step S720 are performed, and the sixth frame portion frame is selected from the video stream (that is, the first video stream corresponding to the view angle 2) to which the last frame portion already played belongs as the frame portion to be played.

Referring to FIG. 9, after the sixth frame is played, immediately switch to the seventh frame of frame portion in the second video stream corresponding to the view angle 3 to continue playing.

When the next frame of frame portion is played at each time in FIG. 9, reference may be made to the method flow in FIG. 7 to select the frame portion of the next frame. For example, when playing the fourth frame portion frame, according to the method flow in FIG. 7, the historical frame portion is the second frame portion frame, and is not in the first and second video streams corresponding to the viewing angle of the to-be-played frame portion, step S716 and step S720 are performed, the to-be-played video stream is selected from the second video stream corresponding to the viewing angle of the to-be-played frame portion, and therefore the fourth frame portion frame in the figure is selected.

As can be seen from FIG. 9, when switching from the second video stream to the first video stream in the same viewing angle, it is possible to switch from the P-frame of the second video stream to the I-frame or the P-frame of the first video stream. In different viewing angles, it is possible to switch from the P-frame of the first video stream for the previous viewing angle to the I-frame of the second video stream for the next viewing angle.

It can be seen that, when the on-demand video is played in aid of the second video stream, it is possible to directly switch from the P-frame of the second video stream to the P-frame or the I-frame of the first video stream for the same viewing angle. In this way, when the viewing angle switching occurs, the delay is relatively small. For example, for the second viewing angle switching in FIG. 8, the viewing angle switching is implemented at the seventh frame, the delay is one frame, and compared with the case in which the auxiliary code stream is a full I-frame, the delay of the switching viewing angle is greatly reduced.

In view of the above, through various embodiments of the present disclosure:

    1. By generating a VAM picture that is slightly larger than the viewing angle of the user and is much smaller than the 8K panoramic picture, when the panoramic video is played on-demand in the VR device, the bandwidth occupied by the server to send the panoramic video to the VR device is reduced, the experience of the user playing the on-demand panoramic video in the VR device is improved, and the delay of the frame portion update is controlled within 25ms;
    2. By generating the first video stream and the second video stream in advance and storing the first video stream and the second video stream, only the frame portion distribution needs to be performed when playing the on-demand video, the concurrency amount of the user is greatly improved, the computing power requirement and the operation cost of the server are reduced, and the cost is reduced by using a server based on the ARM architecture.

FIG. 10 is a schematic structural diagram of a video processing apparatus according to an embodiment of the present disclosure. As shown in FIG. 10, the apparatus comprises:

    a video obtaining unit 1001, configured to obtain a video stream to be processed, wherein the video stream comprises a plurality of video frames, and a field of view angle of each of the plurality of video frames is greater than a field of view angle of a video playback device;

a video partition unit 1002, configured to partition each of the plurality of video frames into a plurality of frame portions, a field of view angle of the frame portion being greater than the field of view angle of the video playback device;

a video generation unit 1003, configured to generate, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

a video distribution unit 1004, configured to determine a frame portion to be played from the first video stream and the second video stream based on a video playback parameter of the video playback device.

Optionally, the video partition unit 1002 is specifically configured to:

obtain frame portion partitioning parameters, the frame portion partitioning parameters comprising a resolution of the frame portion, a scaling factor of the frame portion relative to the video frame, a field of view angle margin of the field of view angle of the frame portion relative to the field of view angle of the video playback device, the field of view angle of the video playback device, and a viewing angle spacing between the frame portions with adjacent viewing angles;

partition each of the plurality of video frames into the plurality of frame portions based on the frame portion partitioning parameters.

Optionally, the apparatus further includes a first parameter determining unit, configured to:

obtain a first value range of the resolution of the frame portion, a second value range of the scaling factor, and a third value range of the field of view angle margin;

obtain a constraint condition for the resolution of the frame portion, the scaling factor, and the field of view angle margin, the constraint condition indicating a ratio of the resolution of the frame portion to the scaling factor minus the field of view angle of the video playback device is equal to the field of view angle margin;

determine the resolution of the frame portion satisfying the constraint condition, the scaling factor satisfying the constraint condition, and the field of view angle margin satisfying the constraint condition within the first value range, the second value range, and the third value range, respectively.

Optionally, the apparatus further includes a second parameter determining unit, configured to:
determine the viewing angle spacing between the frame portions with adjacent viewing angles based on the field of view angle margin and a field of view angle of each of the video frames.

Optionally, the second parameter determining unit is specifically configured to:

obtain a first constraint condition for the viewing angle spacing, the first constraint condition indicating that the viewing angle spacing is less than or equal to the field of view angle margin;

obtain a second constraint condition for the viewing angle spacing, the second constraint condition indicating that the field of view angle of each of the video frames is divisible by the viewing angle spacing;

determine the viewing angle spacing based on the first constraint condition for the viewing angle spacing and the second constraint condition for the viewing angle spacing.

Optionally, the video partition unit 1002 is further configured to:

determine a field of view angle of the frame portion based on the field of view angle of the video playback device and the field of view angle margin;

for each video frame of the plurality of video frames, map the video frame onto a unit sphere, and scale, based on the scaling factor, an image obtained with the mapping;

for each video frame of the plurality of video frames, partition the scaled image of the video frame based on the field of view angle of the frame portion, the resolution, and the viewing angle spacing to obtain the frame portions of respective viewing angles of the video frame.

Optionally, the video partition unit 1002 is further configured to:

align a picture center point of the frame portion with a center point of the scaled image of the video frame, and partition the scaled image of the video frame based on the resolution and the field of view angle of the frame portion to obtain the frame portion for a reference viewing angle of the video frame;

move the picture center point of the frame portion on the scaled image of the video frame based on the viewing angle spacing, and partition the scaled image of the video frame based on the resolution and a field of view angle of the frame portion after the moving to obtain the frame portion for a further viewing angle of the video frame.

Optionally, the video generation unit 1003 is specifically configured to:

for the frame portions among the plurality of frame portions that have the same picture center point position, arrange the frame portions based on the sequential order of playback timestamps of the frame portions to obtain an initial video stream;

convert the initial video stream into the first video stream and the second video stream respectively, the first group of pictures (GOP) of the first video stream comprising an I-frame and at least two P-frames, and the second group of pictures (GOP) of the second video stream comprising an I-frame and at most two P-frames.

Optionally, the apparatus further includes a storage unit, configured to:

for the first video stream and the second video stream generated from the frame portions among the plurality of frame portions that have the same picture center point position, name each frame portion in the first video stream and each frame portion in the second video stream based on the picture center point position, an identifier of the first group of pictures (GOP), an identifier of the second group of pictures (GOP), and a frame portion sequence number setting rule, to obtain name information;

store the first video stream and the second video stream based on the name information of each frame portion in the first video stream and the name information of each frame portion in the second video stream.

Optionally, the video distribution unit 1004 is specifically configured to:

determine, based on the video playback parameter, whether a coordinate of a picture center point of the frame portion to be played is the same as a coordinate of a picture center point of the last frame portion already played;

in accordance with a determination that the coordinate of the picture center point of the frame portion to be played is different from the coordinate of the picture center point of the last frame portion already played, determine, based on a frame portion sequence number of the frame portion to be played, a video stream to which the frame portion to be played belongs, or in accordance with a determination that the coordinate of the picture center point of the frame portion to be played is the same as the coordinate of the picture center point of the last frame portion already played, determine, based on a video stream to which a historical frame portion already played belongs, a video stream to which the frame portion to be played belongs;

select, from the determined video stream, a frame portion whose frame portion sequence number is equal to the frame portion sequence number of the frame portion to be played as the frame portion to be played.

Optionally, the video distribution unit 1004 is further specifically configured to:

extract a coordinate of a picture center point of the video playback device from the video playback parameter;

determine the coordinate of the picture center point of the frame portion to be played based on the coordinate of the picture center point of the video playback device and a field of view angle margin of the field of view angle of the frame portion relative to the field of view angle of the video playback device;

obtain the coordinate of the picture center point of the last frame portion already played, and determine whether the coordinate of the picture center point of the frame portion to be played is the same as the coordinate of the picture center point of the last frame portion already played.

Optionally, the video distribution unit 1004 is further specifically configured to:

obtain a predetermined multiple of a length of the second group of pictures (GOP) of the second video stream, and calculate a remainder of dividing the frame portion sequence number of the frame portion to be played by the predetermined multiple of the length;

in accordance with a determination that the remainder is a predetermined value, determine the second video stream having the same coordinate of the picture center point as the coordinate of the picture center point of the frame portion to be played as the video stream to which the frame portion to be played belongs;

in accordance with a determination that the remainder is not the predetermined value, determine a video stream to which the last frame portion already played belongs as the video stream to which the frame portion to be played belongs.

Optionally, the video distribution unit 1004 is further specifically configured to:

obtain a predetermined multiple of a length of the second group of pictures (GOP) of the second video stream, and determine a frame portion already played as the historical frame portion such that a spacing between a frame portion sequence number of the frame portion already played and the frame portion sequence number of the frame portion to be played is the predetermined multiple of the length;

determine whether the historical frame portion is in the second video stream whose coordinate of the picture center point is the same as the coordinate of the picture center point of the frame portion to be played, and whether the historical frame portion is in the first video stream whose coordinate of the picture center point is the same as the coordinate of the picture center point of the frame portion to be played;

determine the video stream to which the frame portion to be played belongs based on a result of the determining.

Optionally, the video distribution unit 1004 is further specifically configured to:

in accordance with a determination that the historical frame portion is in the second video stream whose coordinate of the picture center point is the same as the coordinate of the picture center point of the frame portion to be played, or the historical frame portion is in the first video stream whose picture center point is the same as the coordinate of the picture center point of the frame portion to be played, determine, as the video stream to which the frame portion to be played belongs, the first video stream whose picture center point is the same as the coordinate of the picture center point of the frame portion to be played;

in accordance with a determination that the historical frame portion is not in the second video stream whose coordinate of the picture center point is the same as the coordinate of the picture center point of the frame portion to be played, and the historical frame portion is not in the first video stream whose picture center point is the same as the coordinate of the picture center point of the frame portion to be played, determine, as the video stream to which the frame portion to be played belongs, the second video stream whose coordinate of the picture center point is the same as the coordinate of the picture center point of the frame portion to be played.

Optionally, each of the plurality of video frames is a panoramic video frame.

The video processing apparatus in the embodiments of the present disclosure may implement various processes of the foregoing video processing method embodiments, and achieve a same effect and function, and details are not repeated herein.

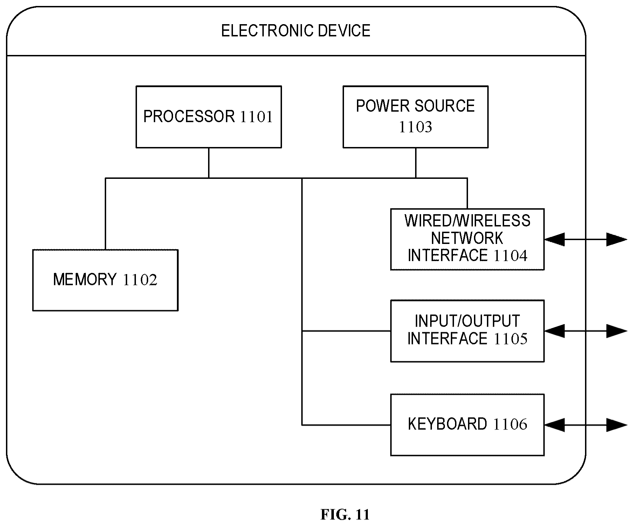

An embodiment of the present disclosure further provides an electronic device, and FIG. 11 is a schematic structural diagram of an electronic device according to an embodiment of the present disclosure. As shown in FIG. 11, electronic devices may vary significantly in configuration or performance, and may include one or more processors 1101 and memory 1102, store one or more application programs or data may be stored in the memory 1102. The memory 1102 may be a transitory storage or a persistent storage. Application programs stored in memory 1102 may include one or more modules (not shown), each of which may include a series of computer-executable instructions in an electronic device. Further, the processor 1101 may be configured to communicate with the memory 1102, and execute a series of computer-executable instructions in the memory 1102 on the electronic device. The electronic device may also include one or more power sources 1103, one or more wired or wireless network interfaces 1104, one or more input or output interfaces 1105, one or more keyboards 1106, and the like.

In a specific embodiment, the electronic device is a video processing device, specifically a backend server, including a processor; and a memory configured to store computer-executable instructions that, when executed, cause the processor to implement the following process:

obtaining a video stream to be processed, wherein the video stream comprises a plurality of video frames, and a field of view angle of each of the plurality of video frames is greater than a field of view angle of a video playback device;

partitioning each of the plurality of video frames into a plurality of frame portions, a field of view angle of the frame portion being greater than the field of view angle of the video playback device;

generating, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

determining a frame portion to be played from the first video stream and the second video stream based on a video playback parameter of the video playback device.

The video processing device in the embodiments of the present disclosure may implement various processes of the foregoing video processing method embodiments, and achieve a same effect and function, and details are not repeated herein.

Another embodiment of the present disclosure further provides a computer-readable storage medium, which is configured to store computer-executable instructions, and the computer-executable instructions, when being executed by a processor, implement the following process:

obtaining a video stream to be processed, wherein the video stream comprises a plurality of video frames, and a field of view angle of each of the plurality of video frames is greater than a field of view angle of a video playback device;

partitioning each of the plurality of video frames into a plurality of frame portions, a field of view angle of the frame portion being greater than the field of view angle of the video playback device;

generating, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

determining a frame portion to be played from the first video stream and the second video stream based on a video playback parameter of the video playback device.

The storage medium in the embodiments of the present disclosure may implement various processes of the foregoing video processing method embodiments, and achieve a same effect and function, and details are not repeated herein.

In various embodiments of the present disclosure, the computer-readable storage medium includes a read-only memory (ROM), a random access memory (RAM), a magnetic disk, an optical disk, or the like.

In the 1990s, improvements to one technology can be clearly distinguished from improvements in hardware (e.g., improvements to circuit structures such as diodes, transistors, switches, etc.) or improvements in software (improvements to process flow). However, with the development of technology, improvements in many method flows today have become a direct improvement in hardware circuit structures. The designers almost all get the corresponding hardware circuit structure by programming the improved method flow into the hardware circuit. Thus, it is not said that improvements in one method flow cannot be implemented with hardware physical modules. For example, a programmable logic device (PLD) (for example, a field programmable gate array (FPGA)) is an integrated circuit whose logic function is determined by programming a device by a user. A designer is programmed to "integrate" a digital system on a piece of PLD without the need for a chip manufacturer to design and manufacture a dedicated integrated circuit chip. Moreover, today, instead of manually fabricating an integrated circuit chip, such programming is also mostly implemented with "logic compiler" software, which is similar to the software compiler used in program development and composition, and the original code to be compiled is also written in a specific programming language, which is referred to as hardware description language (HDL), and HDL is not only one, but there are many types, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. Currently most commonly used are VHDL (Very-High-Speed Integrated Circuit Hardware Description Language) and Verilog. It should also be clear to those skilled in the art that the hardware circuit implementing the logic method process can be easily obtained by only logically programming and programming the method process with the above several hardware description languages.

The controller may be implemented in any suitable manner, for example, the controller may take the form of, for example, a microprocessor or processor and a computer-readable medium, logic gate, switch, Application Specific Integrated Circuit (ASIC), programmable logic controller, and embedded microcontroller that stores computer-readable program code (e.g., software or firmware) executable by the (micro) processor, examples of which include, but are not limited to, the following microcontrollers: ARC 625D, Atmel AT91 SAM, Microchip PIC18 F26 K20, and Silicone Labs C8051 F320, which may also be implemented as part of the control logic of the memory. It will also be appreciated by those skilled in the art that, in addition to implementing the controller in a purely computer readable program code manner, the controller may be enabled to implement the same functions in the form of logic gates, switches, application specific integrated circuits, programmable logic controllers, and embedded microcontrollers, among others. Therefore, such a controller may be considered a hardware component, and a device included therein for implementing various functions may also be considered as a structure in a hardware component. Alternatively, the apparatus for implementing various functions may be considered to be a software module implementing the method or a structure in a hardware component.

The system, apparatus, module, or unit illustrated in the foregoing embodiments may be specifically implemented by a computer chip or an entity, or implemented by a product having a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For convenience of description, the above apparatus is described with it being divide into various units when it is described. Of course, the functions of the units may be implemented in one or more software and/or hardware when implementing the embodiments of the present disclosure.

One skilled in the art will appreciate that one or more embodiments of the present disclosure may be provided as a method, system, or computer program product. Accordingly, one or more embodiments of the present disclosure may take the form of an entirely hardware embodiment, a full software embodiment, or an embodiment combining software and hardware aspects. Moreover, one or more embodiments of the present disclosure may take the form of a computer program product implemented on one or more computer-usable storage media (including, but not limited to, magnetic disk memory, CD-ROM, optical memory, etc.) having computer-usable program code embodied therein.

The present disclosure is described with reference to flowcharts and/or block diagrams of methods, apparatuses (systems), and computer program products according to embodiments of the present disclosure. It should be understood that each flow and/or block in the flowcharts and/or block diagrams, as well as combinations of flows and/or blocks in the flowcharts and/or block diagrams, may be implemented by computer program instructions. These computer program instructions may be provided to a processor of a general purpose computer, special purpose computer, embedded processor, or other programmable data processing apparatus to produce a machine, such that the instructions executed by the processor of the computer or other programmable data processing apparatus generate means for implementing the functions specified in one or more flows of the flowchart and/or one or more blocks of the block diagram.

These computer program instructions may also be stored in a computer-readable memory that can direct a computer or other programmable data processing device to function in a particular manner, such that the instructions stored in the computer-readable memory produce an article of manufacture including an instruction device that implements the functions specified in one or more flows of the flowchart and/or one or more blocks of the block diagram.

These computer program instructions may also be loaded onto a computer or other programmable data processing device such that a series of operational steps are performed on a computer or other programmable device to produce a computer implemented process, such that the instructions executed on the computer or other programmable device provide steps for implementing the functions specified in one or more flows of the flowchart and/or one or more blocks of the block diagram.

It should also be noted that the terms "comprise", "comprising," or any other variant thereof are intended to cover a non-exclusive inclusion, such that a process, method, article, or apparatus comprising a series of elements includes not only those elements, but also other elements not expressly listed, or elements inherent to such a process, method, article, or apparatus. Without further restriction, the elements defined by the statement "comprise a ..." do not preclude the presence of additional identical elements in the process, method, article, or device that includes the elements.

One or more embodiments of the present disclosure may be described in the general context of computer-executable instructions executed by a computer, such as program modules. Generally, program modules include routines, programs, objects, components, data structures, and so forth that perform particular tasks or implement particular abstract data types. One or more embodiments of the present disclosure may also be practiced in distributed computing environments where tasks are performed by remote processing devices connected through a communication network. In a distributed computing environment, program modules may be located in local and remote computer storage media, including storage devices.

Various embodiments of the present disclosure are described in a progressive manner, parts of the same similarity between the various embodiments may be referred to each other, and each embodiment focuses on differences from other embodiments. In particular, for the system embodiment, since it is substantially similar to the method embodiment, the description is relatively simple, and reference may be made to some descriptions of the method embodiments.

The above descriptions are only embodiments of the present disclosure and are not intended to limit the present disclosure. Various modifications and variations can be made to those skilled in the art. Any modifications, equivalent substitutions, improvements, and the like made within the spirit and principle of the present disclosure shall fall within the scope of the claims of the present disclosure.

## Claims

1. A video processing method, charactered in comprising:

   obtaining a video stream to be processed, wherein the video stream comprises a plurality of video frames, and a field of view angle of each of the plurality of video frames is greater than a field of view angle of a video playback device;
   partitioning each of the plurality of video frames into a plurality of frame portions, a field of view angle of the frame portion being greater than the field of view angle of the video playback device;

generating, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;

determining a frame portion to be played from the first video stream and the second video stream based on a video playback parameter of the video playback device.

2. The method of claim 1, characterized in that partitioning each of the plurality of video frames into the plurality of frame portions comprises:

obtaining frame portion partitioning parameters, the frame portion partitioning parameters comprising a resolution of the frame portion, a scaling factor of the frame portion relative to the video frame, a field of view angle margin of the field of view angle of the frame portion relative to the field of view angle of the video playback device, the field of view angle of the video playback device, and a viewing angle spacing between the frame portions with adjacent viewing angles;

partitioning each of the plurality of video frames into the plurality of frame portions based on the frame portion partitioning parameters.

3. The method of claim 2, characterized in that the resolution of the frame portion, the scaling factor of the frame portion relative to the video frame, the field of view angle margin of the field of view angle of the frame portion relative to the field of view angle of the video playback device are determined by:

obtaining a first value range of the resolution of the frame portion, a second value range of the scaling factor, and a third value range of the field of view angle margin;

obtaining a constraint condition for the resolution of the frame portion, the scaling factor, and the field of view angle margin, the constraint condition indicating a ratio of the resolution of the frame portion to the scaling factor minus the field of view angle of the video playback device is equal to the field of view angle margin;

determining the resolution of the frame portion satisfying the constraint condition, the scaling factor satisfying the constraint condition, and the field of view angle margin satisfying the constraint condition within the first value range, the second value range, and the third value range, respectively.

4. The method of claim 2, characterized in that the viewing angle spacing is determined by:
determining the viewing angle spacing between the frame portions with adjacent viewing angles based on the field of view angle margin and a field of view angle of each of the video frames.

5. The method of claim 4, characterized in that determining the viewing angle spacing between the frame portions with adjacent viewing angles based on the field of view angle margin and the field of view angle of each of the video frames comprises:

obtaining a first constraint condition for the viewing angle spacing, the first constraint condition indicating that the viewing angle spacing is less than or equal to the field of view angle margin;

obtaining a second constraint condition for the viewing angle spacing, the second constraint condition indicating that the field of view angle of each of the video frames is divisible by the viewing angle spacing;

determining the viewing angle spacing based on the first constraint condition for the viewing angle spacing and the second constraint condition for the viewing angle spacing.

6. The method of any of claims 2 to 5, characterized in that partitioning each of the plurality of video frames into the plurality of frame portions based on the frame portion partitioning parameters comprises:

determining a field of view angle of the frame portion based on the field of view angle of the video playback device and the field of view angle margin;

for each video frame of the plurality of video frames, mapping the video frame onto a unit sphere, and scaling, based on the scaling factor, an image obtained with the mapping;

for each video frame of the plurality of video frames, partitioning the scaled image of the video frame based on the field of view angle of the frame portion, the resolution, and the viewing angle spacing to obtain the frame portions of respective viewing angles of the video frame.

7. The method of claim 6, characterized in that partitioning the scaled image of the video frame based on the field of view angle of the frame portion, the resolution, and the viewing angle spacing to obtain the frame portions of respective viewing angles of the video frame comprises:

aligning a picture center point of the frame portion with a center point of the scaled image of the video frame, and partitioning the scaled image of the video frame based on the resolution and the field of view angle of the frame portion to obtain the frame portion for a reference viewing angle of the video frame;

moving the picture center point of the frame portion on the scaled image of the video frame based on the viewing angle spacing, and partitioning the scaled image of the video frame based on the resolution and a field of view angle of the frame portion after the moving to obtain the frame portion for a further viewing angle of the video frame.

8. The method of any of claims 1 to 5, characterized in that generating, for the frame portions among the plurality of frame portions that have the same picture center point position, the first video stream and the second video stream based on the sequential order of playback timestamps of the frame portions comprises:

for the frame portions among the plurality of frame portions that have the same picture center point position, arranging the frame portions based on the sequential order of playback timestamps of the frame portions to obtain an initial video stream;

converting the initial video stream into the first video stream and the second video stream respectively, the first group of pictures (GOP) of the first video stream comprising an I-frame and at least two P-frames, and the second group of pictures (GOP) of the second video stream comprising an I-frame and at most two P-frames.

9. The method of any of claims 1 to 5, characterized in that after generating the first video stream and the second video stream, the method further comprises:

for the first video stream and the second video stream generated from the frame portions among the plurality of frame portions that have the same picture center point position, naming each frame portion in the first video stream and each frame portion in the second video stream based on the picture center point position, an identifier of the first group of pictures (GOP), an identifier of the second group of pictures (GOP), and a frame portion sequence number setting rule, to obtain name information;

storing the first video stream and the second video stream based on the name information of each frame portion in the first video stream and the name information of each frame portion in the second video stream.

10. The method of any of claims 1 to 5, characterized in that determining the frame portion to be played from the first video stream and the second video stream based on the video playback parameter of the video playback device comprises:

determining, based on the video playback parameter, whether a coordinate of a picture center point of the frame portion to be played is the same as a coordinate of a picture center point of the last frame portion already played;

in accordance with a determination that the coordinate of the picture center point of the frame portion to be played is different from the coordinate of the picture center point of the last frame portion already played, determining, based on a frame portion sequence number of the frame portion to be played, a video stream to which the frame portion to be played belongs, or in accordance with a determination that the coordinate of the picture center point of the frame portion to be played is the same as the coordinate of the picture center point of the last frame portion already played, determining, based on a video stream to which a historical frame portion already played belongs, a video stream to which the frame portion to be played belongs;

selecting, from the determined video stream, a frame portion whose frame portion sequence number is equal to the frame portion sequence number of the frame portion to be played as the frame portion to be played.

11. The method of claim 10, characterized in that determining, based on the video playback parameter, whether the coordinate of the picture center point of the frame portion to be played is the same as the coordinate of the picture center point of the last frame portion already played comprises:

extracting a coordinate of a picture center point of the video playback device from the video playback parameter;

determining the coordinate of the picture center point of the frame portion to be played based on the coordinate of the picture center point of the video playback device and a field of view angle margin of the field of view angle of the frame portion relative to the field of view angle of the video playback device;

obtaining the coordinate of the picture center point of the last frame portion already played, and determining whether the coordinate of the picture center point of the frame portion to be played is the same as the coordinate of the picture center point of the last frame portion already played.

12. The method of claim 10, characterized in that determining, based on the frame portion sequence number of the frame portion to be played, the video stream to which the frame portion to be played belongs comprises:

obtaining a predetermined multiple of a length of the second group of pictures (GOP) of the second video stream, and calculating a remainder of dividing the frame portion sequence number of the frame portion to be played by the predetermined multiple of the length;

in accordance with a determination that the remainder is a predetermined value, determining the second video stream having the same coordinate of the picture center point as the coordinate of the picture center point of the frame portion to be played as the video stream to which the frame portion to be played belongs;

in accordance with a determination that the remainder is not the predetermined value, determining a video stream to which the last frame portion already played belongs as the video stream to which the frame portion to be played belongs.

13. The method of claim 10, characterized in that determining, based on the video stream to which the historical frame portion already played belongs, the video stream to which the frame portion to be played belongs comprises:

obtaining a predetermined multiple of a length of the second group of pictures (GOP) of the second video stream, and determining a frame portion already played as the historical frame portion such that a spacing between a frame portion sequence number of the frame portion already played and the frame portion sequence number of the frame portion to be played is the predetermined multiple of the length;

determining whether the historical frame portion is in the second video stream whose coordinate of the picture center point is the same as the coordinate of the picture center point of the frame portion to be played, and whether the historical frame portion is in the first video stream whose coordinate of the picture center point is the same as the coordinate of the picture center point of the frame portion to be played;

determining the video stream to which the frame portion to be played belongs based on a result of the determining.

14. The method of claim 13, characterized in that determining the video stream to which the frame portion to be played belongs based on the result of the determining comprises:

in accordance with a determination that the historical frame portion is in the second video stream whose coordinate of the picture center point is the same as the coordinate of the picture center point of the frame portion to be played, or the historical frame portion is in the first video stream whose picture center point is the same as the coordinate of the picture center point of the frame portion to be played, determining, as the video stream to which the frame portion to be played belongs, the first video stream whose picture center point is the same as the coordinate of the picture center point of the frame portion to be played;

in accordance with a determination that the historical frame portion is not in the second video stream whose coordinate of the picture center point is the same as the coordinate of the picture center point of the frame portion to be played, and the historical frame portion is not in the first video stream whose picture center point is the same as the coordinate of the picture center point of the frame portion to be played, determining, as the video stream to which the frame portion to be played belongs, the second video stream whose coordinate of the picture center point is the same as the coordinate of the picture center point of the frame portion to be played.

15. The method of any of claims 1 to 14, characterized in that each of the plurality of video frames is a panoramic video frame.

16. A video processing apparatus, charactered in comprising:

a video obtaining unit, configured to obtain a video stream to be processed, wherein the video stream comprises a plurality of video frames, and a field of view angle of each of the plurality of video frames is greater than a field of view angle of a video playback device;

a video partition unit, configured to partition each of the plurality of video frames into a plurality of frame portions, a field of view angle of the frame portion being greater than the field of view angle of the video playback device;

a video generation unit, configured to generate, for frame portions among the plurality of frame portions that have a same picture center point position, a first video stream and a second video stream based on a sequential order of playback timestamps of the frame portions, a first group of pictures (GOP) of the first video stream being a standard GOP, a length of a second group of pictures (GOP) of the second video stream being less than a length of the first group of pictures (GOP) of the first video stream;
a video distribution unit, configured to determine a frame portion to be played from the first video stream and the second video stream based on a video playback parameter of the video playback device.

17. An electronic device, charactered in comprising:

a processor; and
a memory configured to store computer-executable instructions that, when being executed, cause the processor to perform steps of the method of any of claims 1 to 15.

18. A computer-readable storage medium, charactered in being configured to store computer-executable instructions, wherein the computer-executable instructions, when being executed by a processor, implement steps of the method of any of claims 1 to 15.

OBTAIN A VIDEO STREAM TO BE PROCESSED, WHEREIN THE VIDEO STREAM COMPRISES A PLURALITY OF VIDEO FRAMES, AND A FIELD OF VIEW ANGLE OF EACH OF THE PLURALITY OF VIDEO FRAMES IS GREATER THAN A FIELD OF VIEW ANGLE OF A VIDEO PLAYBACK DEVICE — S102

PARTITION EACH OF THE PLURALITY OF VIDEO FRAMES INTO A PLURALITY OF FRAME PORTIONS, A FIELD OF VIEW ANGLE OF THE FRAME PORTION BEING GREATER THAN THE FIELD OF VIEW ANGLE OF THE VIDEO PLAYBACK DEVICE — S104

GENERATE, FOR FRAME PORTIONS AMONG THE PLURALITY OF FRAME PORTIONS THAT HAVE A SAME PICTURE CENTER POINT POSITION, A FIRST VIDEO STREAM AND A SECOND VIDEO STREAM BASED ON A SEQUENTIAL ORDER OF PLAYBACK TIMESTAMPS OF THE FRAME PORTIONS — S106

DETERMINE A FRAME PORTION TO BE PLAYED FROM THE FIRST VIDEO STREAM AND THE SECOND VIDEO STREAM BASED ON A VIDEO PLAYBACK PARAMETER OF THE VIDEO PLAYBACK DEVICE — S108

**FIG. 1**

EDGE CLOUD COMPUTER ROOM

OFFLINE TRANSCODING SERVICE

FRAME PORTION PARTITIONING SERVICE

VIDEO STREAM CONVERSION SERVICE

VIDEO STREAM →

STORAGE SERVICE

REAL-TIME DISTRIBUTION SERVICE

FRAME PORTION

VIDEO PLAYBACK PARAMETER

VIDEO PLAYBACK DEVICE

VIDEO PLAYBACK DEVICE

VIDEO PLAYBACK DEVICE

**FIG. 2**

VAM

FOV

+

Margin/2

**FIG. 3**

Rotation

VAM | VAM

FOV | FOV

+ +

Margin/2

**FIG. 4**

| VIDEO FRAME 1 | | PICTURE FOR VIEWING ANGLE 1 | PICTURE FOR VIEWING ANGLE 2 | ...... | PICTURE FOR VIEWING ANGLE n |
| VIDEO FRAME 2 | | PICTURE FOR VIEWING ANGLE 1 | PICTURE FOR VIEWING ANGLE 2 | ...... | PICTURE FOR VIEWING ANGLE n |

......

| VIDEO FRAME m | | PICTURE FOR VIEWING ANGLE 1 | PICTURE FOR VIEWING ANGLE 2 | ...... | PICTURE FOR VIEWING ANGLE n |

**FIG. 5**

VIEWING ANGLE 1

IPP STREAM   IP STREAM

| PICTURE FROM VIDEO FRAME 1 | PICTURE FROM VIDEO FRAME 1 |
| PICTURE FROM VIDEO FRAME 2 | PICTURE FROM VIDEO FRAME 2 |
| ...... | ...... |
| PICTURE FROM VIDEO FRAME K | PICTURE FROM VIDEO FRAME K |

VIEWING ANGLE 2

IPP STREAM   IP STREAM

| PICTURE FROM VIDEO FRAME 1 | PICTURE FROM VIDEO FRAME 1 |
| PICTURE FROM VIDEO FRAME 2 | PICTURE FROM VIDEO FRAME 2 |
| ...... | ...... |
| PICTURE FROM VIDEO FRAME K | PICTURE FROM VIDEO FRAME K |

VIEWING ANGLE T

IPP STREAM   IP STREAM

| PICTURE FROM VIDEO FRAME 1 | PICTURE FROM VIDEO FRAME 1 |
| PICTURE FROM VIDEO FRAME 2 | PICTURE FROM VIDEO FRAME 2 |
| ...... | ...... |
| PICTURE FROM VIDEO FRAME K | PICTURE FROM VIDEO FRAME K |

**FIG. 6**

S702

OBTAIN A VIDEO PLAYBACK PARAMETER OF A USER, AND
EXTRACT, FROM THE VIDEO PLAYBACK PARAMETER, A FRAME
PORTION SEQUENCE NUMBER OF A FRAME PORTION TO BE
PLAYED

S704

DETERMINE
WHETHER THE FRAME PORTION SEQUENCE NUMBER OF
THE FRAME PORTION TO BE PLAYED IS GREATER THAN OR
EQUAL TO 3

NO

YES

S706

WHETHER A VIEWING
ANGLE OF THE FRAME PORTION TO BE PLAYED IS THE
SAME AS THE VIEWING ANGLE AND THE SCALING FACTOR
OF THE LAST FRAME PORTION ALREADY PLAYED

NO

YES

S708

WHETHER THE HISTORICAL FRAME PORTION
IS IN A SECOND VIDEO STREAM CORRESPONDING TO THE
VIEWING ANGLE OF THE FRAME PORTION TO BE PLAYED

YES

NO

S712

WHETHER A REMAINDER OF DIVIDING
THE FRAME PORTION SEQUENCE
NUMBER OF THE FRAME PORTION TO BE
PLAYED BY THE PREDETERMINED
MULTIPLE OF THE LENGTH IS A
PREDETERMINED VALUE

NO            YES

S710

WHETHER THE HISTORICAL FRAME PORTION IS
IN A FIRST VIDEO STREAM CORRESPONDING TO THE
VIEWING ANGLE OF THE FRAME PORTION TO BE PLAYED

YES

NO

S714

DETERMINE, AS A VIDEO STREAM
TO WHICH THE FRAME PORTION TO
BE PLAYED BELONGS, A VIDEO
STREAM TO WHICH THE LAST
FRAME PORTION ALREADY PLAYED
BELONGS

S716

DETERMINE, AS A VIDEO STREAM TO WHICH THE FRAME
PORTION TO BE PLAYED BELONGS, THE SECOND VIDEO STREAM
CORRESPONDING TO THE VIEWING ANGLE OF THE FRAME
PORTION TO BE PLAYED

S718

DETERMINE, AS A VIDEO
STREAM TO WHICH THE FRAME
PORTION TO BE PLAYED
BELONGS, THE FIRST VIDEO
STREAM CORRESPONDING TO
THE VIEWING ANGLE OF THE
FRAME PORTION TO BE PLAYED

SELECT, FROM THE DETERMINED VIDEO STREAM, A FRAME
PORTION WHOSE FRAME PORTION SEQUENCE NUMBER IS
EQUAL TO THE FRAME PORTION SEQUENCE NUMBER OF THE
FRAME PORTION TO BE PLAYED AS THE FRAME PORTION TO BE
PLAYED

S720

**FIG. 7**

| S1F1 | S1F2 | S2F3 | S2F4 | S2F5 | S2F6 | S3F7 | S3F8 |

STREAM
SWITCHING

STREAM
SWITCHING

**FIG. 8**

VIEWING ANGLE S1    VIEWING ANGLE S2    VIEWING ANGLE S3

| | IPP STREAM | IP STREAM | IP STREAM | IPP STREAM | IP STREAM | IPP STREAM |
|---|---|---|---|---|---|---|
| F1 | I | I | I | I | I | I |
| F2 | P | P | P | P | P | P |
| F3 | P | I | I | P | I | P |
| F4 | P | P | P | P | P | P |
| F5 | P | I | I | P | I | P |
| F6 | P | P | P | P | P | P |
| F7 | P | I | I | P | I | P |
| F8 | P | P | P | P | P | P |
| F9 | I | I | I | I | I | I |

STREAM SWITCHING OPERATION

**FIG. 9**

VIDEO OBTAINING UNIT — 1001

VIDEO PARTITION UNIT — 1002

VIDEO GENERATION UNIT — 1003

VIDEO DISTRIBUTION UNIT — 1004

**FIG. 10**

ELECTRONIC DEVICE

PROCESSOR 1101

POWER SOURCE 1103

MEMORY 1102

WIRED/WIRELESS NETWORK INTERFACE 1104

INPUT/OUTPUT INTERFACE 1105

KEYBOARD 1106

FIG. 11

## INTERNATIONAL SEARCH REPORT

| International application No. |
| --- |
| **PCT/CN2024/081742** |

### A. CLASSIFICATION OF SUBJECT MATTER

H04N21/472(2011.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

CNABS; CNTXT; CNKI; VEN; WPABS; ENTXT: 全景, 虚拟现实, 视频, 分割, 视场角, 缓冲, 缩放, panoramic, virtual reality, video, devide, FOV, buffer, zoom, GOP

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | CN 105915937 A (SHANGHAI LEXIANG TECHNOLOGY CO., LTD.) 31 August 2016 (2016-08-31) description, paragraphs 23-49 | 1, 8-18 |
| Y | CN 106162235 A (BEIJING BAIDU NETCOM SCIENCE AND TECHNOLOGY CO., LTD.) 23 November 2016 (2016-11-23) description, paragraphs 46-60 | 1, 8-18 |
| A | CN 108124193 A (ZTE CORP.) 05 June 2018 (2018-06-05) entire document | 1-18 |
| A | CN 115278193 A (CHINA MOBILE GROUP HEBEI COMPANY LIMITED et al.) 01 November 2022 (2022-11-01) entire document | 1-18 |
| A | JP 2005250560 A (MITSUBISHI ELECTRIC CORP.) 15 September 2005 (2005-09-15) entire document | 1-18 |
| A | CN 102630040 A (THOMSON LICENSING SAS) 08 August 2012 (2012-08-08) entire document | 1-18 |

✓ Further documents are listed in the continuation of Box C.  ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 June 2024** | **14 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/081742** |

### C. DOCUMENTS CONSIDERED TO BE RELEVANT

| Category* | Citation of document, with indication, where appropriate, of the relevant passages | Relevant to claim No. |
| --- | --- | --- |
| A | CN 113570617 A (HONOR TERMINAL CO., LTD.) 29 October 2021 (2021-10-29) entire document | 1-18 |

Form PCT/ISA/210 (second sheet) (July 2022)

## INTERNATIONAL SEARCH REPORT
### Information on patent family members

International application No.

**PCT/CN2024/081742**

| Patent document cited in search report | | | Publication date (day/month/year) | Patent family member(s) | | | Publication date (day/month/year) |
|---|---|---|---|---|---|---|---|
| CN | 105915937 | A | 31 August 2016 | None | | | |
| CN | 106162235 | A | 23 November 2016 | US | 2018054649 | A1 | 22 February 2018 |
| | | | | US | 9961398 | B2 | 01 May 2018 |
| CN | 108124193 | A | 05 June 2018 | WO | 2019128342 | A1 | 04 July 2019 |
| CN | 115278193 | A | 01 November 2022 | None | | | |
| JP | 2005250560 | A | 15 September 2005 | JP | 4437677 | B2 | 24 March 2010 |
| CN | 102630040 | A | 08 August 2012 | JP | 2012165380 | A | 30 August 2012 |
| | | | | US | 2012163476 | A1 | 28 June 2012 |
| | | | | US | 9137477 | B2 | 15 September 2015 |
| | | | | KR | 20120090831 | A | 17 August 2012 |
| | | | | EP | 2485501 | A1 | 08 August 2012 |
| | | | | EP | 2485501 | B1 | 03 April 2019 |
| | | | | EP | 2485472 | A1 | 08 August 2012 |
| CN | 113570617 | A | 29 October 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310348154